# EUROPEAN PATENT APPLICATION

(11) **EP 3 067 792 A1**
(43) Date of publication of application: **14.09.2016**
(21) Application number: 13899262.3
(22) Date of filing: 13.12.2013
(51) Int. Cl.: G06F 3/0482

(54) **ICON DISPLAY METHOD OF WEARABLE INTELLIGENT DEVICE AND RELATED DEVICE**

(71) Applicant: Huawei Device Co., Ltd., Shenzhen, Guangdong 518129 (CN)
(72) Inventor: LAN, Juan, Shenzhen Guangdong 518129 (CN)
(74) Representative: Goddar, Heinz J.
(86) International application number: PCT/CN2013/089406
(87) International publication number: WO 2015/085586

(57) **Abstract**

Embodiments of the present invention provide an icon display method of a wearable intelligent device and a related device. In the method, the device includes a first display unit and an encircling apparatus, the encircling apparatus is configured to fasten the device on a human body in an encircling manner, and the encircling apparatus includes a second display unit. The method includes: receiving a display operation instruction; and jointly displaying, based on a preset sequence of at least two icons, the icons on the first display unit and the second display unit. It may be learned that, in the embodiments, a display area of a display apparatus is skillfully increased, such an increase does not affect characteristics of lightness and handiness of the wearable intelligent device, an increase in a quantity of displayed icons is implemented, and a speed of locating, by a user, an icon that the user needs is improved, thereby preventing system load from increasing due to excessive user operations.

## Description

### TECHNICAL FIELD

The present invention relates to the field of intelligent device technologies, and in particular, to an icon display method of a wearable intelligent device and a related device.

### BACKGROUND

With successive breakthroughs of technologies such as man-machine interaction and voice intelligence, wearable intelligent devices are forming a new market trend. There are various types of wearable intelligent devices, and among the various types of wearable intelligent devices, an encircling wearable intelligent device gradually gains the popularity among consumers because the encircling wearable intelligent device is easy to remove, light, and handy, and has other characteristics.

Currently, to facilitate use of a user, the encircling wearable intelligent device generally displays several icons to the user by using a display apparatus. For example, icons that have multiple intelligent functions, such as "Phone", "Messaging", and "Email" can be displayed on a display screen of a smart watch, so that the user can select an intelligent function that the user needs to implement.

However, because the encircling wearable intelligent device implements a property of being wearable in an encircling manner, the display apparatus included in the encircling wearable intelligent device is of a relatively limited size and can display an extremely limited quantity of icons, which causes the user to be unable to quickly locate an icon that the user needs. Therefore, user operations become excessive, and system load increases.

### SUMMARY

To resolve technical problems, embodiments of the present invention provide an icon display method of a wearable intelligent device and a related device, so as to increase a quantity of icons that can be displayed, thereby preventing system load from increasing due to excessive user operations.

In view of this, technical solutions in the present invention that resolve the technical problems are as follows:

According to a first aspect, an embodiment of the present invention provides an icon display method of a wearable intelligent device, where the device includes a first display unit and an encircling apparatus, the encircling apparatus is configured to fasten the device on a human body in an encircling manner, and the encircling apparatus includes a second display unit; and the method includes:
receiving a display operation instruction; and
jointly displaying, based on a preset sequence of at least two icons, the icons on the first display unit and the second display unit.

In a first possible implementation manner of the first aspect, the method further includes:
receiving a movement operation instruction;
acquiring a movement direction in the movement operation instruction; and
moving, based on the movement direction and the preset sequence of the at least two icons, display positions of the icons on the first display unit and the second display unit.

With reference to the first possible implementation manner of the first aspect, in a second possible implementation manner of the first aspect, a distance value of movement of the icons on the first display unit is equal to a distance value of movement of the icons on the second display unit.

With reference to the first or the second possible implementation manner of the first aspect, in a third possible implementation manner of the first aspect, the movement operation instruction is an instruction generated after a sliding operation on the first display unit or the second display unit is detected.

With reference to the first or the second possible implementation manner of the first aspect, in a fourth possible implementation manner of the first aspect, the device further includes a mechanical setting apparatus, and the movement operation instruction is an instruction generated after an operation on the mechanical setting apparatus is detected.

With reference to the fourth possible implementation manner of the first aspect, in a fifth possible implementation manner of the first aspect, the mechanical setting apparatus is disposed on the device.

With reference to the fourth possible implementation manner of the first aspect, in a sixth possible implementation manner of the first aspect, the mechanical setting apparatus is connected to the device by using a wireless network.

With reference to the first or the second possible implementation manner of the first aspect, in a seventh possible implementation manner of the first aspect, the movement operation instruction is an instruction generated after an operation of selecting a target icon on the second display unit is detected, and the movement operation instruction includes the target icon;
the method further includes: acquiring the target icon in the movement operation instruction; and
the moving display positions of the icons on the first display unit and the second display unit is specifically:
moving the display positions of the icons on the first display unit and the second display unit, and displaying the target icon on the first display unit.

With reference to the first aspect or any one of the first to the seventh possible implementation manners of the first aspect, in an eighth possible implementation manner of the first aspect, the icons are specifically menu items of an operation menu.

With reference to the eighth possible implementation manner of the first aspect, in a ninth possible implementation manner of the first aspect, the method further includes:
receiving a select operation instruction;
acquiring a selected menu item in the select operation instruction; and
jointly displaying a next-level menu of the selected menu item on the first display unit and the second display unit.

With reference to the eighth or the ninth possible implementation manner of the first aspect, in a tenth possible implementation manner of the first aspect, the method further includes:
receiving a return operation instruction;
acquiring a menu item currently displayed on the first display unit; and jointly displaying a previous-level menu of the acquired menu item on the first display unit and the second display unit.

With reference to the eighth, the ninth, or the tenth possible implementation manner of the first aspect, in an eleventh possible implementation manner of the first aspect, the method further includes:
receiving a main menu operation instruction; and
jointly displaying a main menu of the operation menu on the first display unit and the second display unit.

With reference to the first aspect or any one of the first to the eleventh possible implementation manners of the first aspect, in a twelfth possible implementation manner of the first aspect, the method further includes:
receiving a switching operation instruction;
hiding icons currently displayed on the first display unit and the second display unit; and
displaying time on the first display unit and/or the second display unit.

With reference to the first aspect or any one of the first to the twelfth possible implementation manners of the first aspect, in a thirteenth possible implementation manner of the first aspect, the encircling apparatus further includes a third display unit, and the third display unit and the second display unit are respectively disposed on two sides of the first display unit; and
the jointly displaying the icons on the first display unit and the second display unit is specifically:
jointly displaying the icons on the first display unit, the second display unit, and the third display unit.

With reference to the first aspect or any one of the first to the thirteenth possible implementation manners of the first aspect, in a fourteenth possible implementation manner of the first aspect, the first display unit and the second display unit belong to a same display apparatus, or belong to different display apparatuses.

According to a second aspect, an embodiment of the present invention further provides a wearable intelligent device, where the device includes: a first display unit, an encircling apparatus, and a receiving unit, the encircling apparatus is configured to fasten the device on a human body in an encircling manner, and the encircling apparatus includes a second display unit;
the receiving unit is configured to receive a display operation instruction; and
the first display unit and the second display unit are configured to: based on a preset sequence of at least two icons, jointly display the icons.

In a first possible implementation manner of the second aspect, the receiving unit is further configured to receive a movement operation instruction, and acquire a movement direction in the movement operation instruction; and
the first display unit and the second display unit are further configured to: based on the movement direction and the preset sequence of the at least two icons, move display positions of the icons.

With reference to the first possible implementation manner of the second aspect, in a second possible implementation manner of the second aspect, a distance value of movement of the icons on the first display unit is equal to a distance value of movement of the icons on the second display unit.

With reference to the first or the second possible implementation manner of the second aspect, in a third possible implementation manner of the second aspect, the movement operation instruction is an instruction generated after a sliding operation on the first display unit or the second display unit is detected.

With reference to the first or the second possible implementation manner of the second aspect, in a fourth possible implementation manner of the second aspect, the device further includes a mechanical setting apparatus, and the movement operation instruction is an instruction generated after an operation on the mechanical setting apparatus is detected.

With reference to the fourth possible implementation manner of the second aspect, in a fifth possible implementation manner of the second aspect, the mechanical setting apparatus is disposed on the device.

With reference to the fourth possible implementation manner of the second aspect, in a sixth possible implementation manner of the second aspect, the mechanical setting apparatus is connected to the device by using a wireless network.

With reference to the first or the second possible implementation manner of the second aspect, in a seventh possible implementation manner of the second aspect, the movement operation instruction is an instruction generated after an operation of selecting a target icon on the second display unit is detected, and the movement operation instruction includes the target icon; and
that the first display unit and the second display unit are configured to move the display positions of the icons is specifically: the first display unit and the second display unit are configured to move the display positions of the icons, and display the target icon on the first display unit.

With reference to the second aspect or any one of the first to the seventh possible implementation manners of the second aspect, in an eighth possible implementation manner of the second aspect, the icons are specifically menu items of an operation menu.

With reference to the eighth possible implementation manner of the second aspect, in a ninth possible implementation manner of the second aspect, the receiving unit is further configured to receive a select operation instruction, and acquire a selected menu item in the select operation instruction; and
the first display unit and the second display unit are further configured to jointly display a next-level menu of the selected menu item.

With reference to the eighth or the ninth possible implementation manner of the second aspect, in a tenth possible implementation manner of the second aspect, the receiving unit is further configured to receive a return operation instruction, and acquire a menu item currently displayed on the first display unit; and
the first display unit and the second display unit are further configured to jointly display a previous-level menu of the acquired menu item.

With reference to the eighth, the ninth, or the tenth possible implementation manner of the second aspect, in an eleventh possible implementation manner of the second aspect, the receiving unit is further configured to receive a main menu operation instruction; and
the first display unit and the second display unit are further configured to jointly display a main menu of the operation menu.

With reference to the second aspect or any one of the first to the eleventh possible implementation manners of the second aspect, in a twelfth possible implementation manner of the second aspect, the receiving unit is further configured to receive a switching operation instruction;
the first display unit and the second display unit are further configured to hide currently displayed icons; and
the first display unit and/or the second display unit are/is further configured to display time.

With reference to the second aspect or any one of the first to the twelfth possible implementation manners of the second aspect, in a thirteenth possible implementation manner of the second aspect, the encircling apparatus further includes a third display unit, and the third display unit and the second display unit are respectively disposed on two sides of the first display unit; and
the first display unit, the second display unit, and the third display unit are configured to jointly display the icons.

With reference to the second aspect or any one of the first to the thirteenth possible implementation manners of the second aspect, in a fourteenth possible implementation manner of the second aspect, the first display unit and the second display unit belong to a same display apparatus, or belong to different display apparatuses.

According to a third aspect, an embodiment of the present invention provides a wearable intelligent device, where the device includes: a first display screen, an encircling apparatus, a receiver, and a processor, the encircling apparatus is configured to fasten the device on a human body in an encircling manner, and the encircling apparatus includes a second display screen;
the receiver is configured to receive a display operation instruction; and
the processor is configured to: based on a preset sequence of at least two icons, jointly display the icons on the first display screen and the second display screen.

In a first possible implementation manner of the third aspect, the receiver is further configured to receive a movement operation instruction; and
the processor is further configured to acquire a movement direction in the movement operation instruction; and move, based on the movement direction and the preset sequence of the at least two icons, display positions of the icons on the first display screen and the second display screen.

With reference to the first possible implementation manner of the third aspect, in a second possible implementation manner of the third aspect, a distance value of movement of the icons on the first display unit is equal to a distance value of movement of the icons on the second display unit.

With reference to the first or the second possible implementation manner of the third aspect, in a third possible implementation manner of the third aspect, the first display screen or the second display screen is a touchscreen; and
the movement operation instruction is an instruction generated after a sliding operation on the touchscreen is detected.

With reference to the first or the second possible implementation manner of the third aspect, in a fourth possible implementation manner of the third aspect, the device further includes a mechanical setting apparatus, and the movement operation instruction is an instruction generated after an operation on the mechanical setting apparatus is detected.

With reference to the fourth possible implementation manner of the third aspect, in a fifth possible implementation manner of the third aspect, the mechanical setting apparatus is disposed on the device.

With reference to the fourth possible implementation manner of the third aspect, in a sixth possible implementation manner of the third aspect, the mechanical setting apparatus is connected to the device by using a wireless network.

With reference to the first or the second possible implementation manner of the third aspect, in a seventh possible implementation manner of the third aspect, the second display screen is a touchscreen, the movement operation instruction is an instruction generated after an operation of selecting a target icon on the touchscreen is detected, and the movement operation instruction includes the target icon;
the controller is further configured to acquire the target icon in the movement operation instruction; and
that the controller is configured to move the display positions of the icons on the first display screen and the second display screen is specifically: the controller is configured to move the display positions of the icons on the first display screen and the second display screen, and display the target icon on the first display screen.

With reference to the third aspect or any one of the first to the seventh possible implementation manners of the third aspect, in an eighth possible implementation manner of the third aspect, the icons are specifically menu items of an operation menu.

With reference to the eighth possible implementation manner of the third aspect, in a ninth possible implementation manner of the third aspect, the receiver is further configured to receive a select operation instruction; and
the processor is further configured to acquire a selected menu item in the select operation instruction, and jointly display a next-level menu of the selected menu item on the first display screen and the second display screen.

With reference to the eighth or the ninth possible implementation manner of the third aspect, in a tenth possible implementation manner of the third aspect, the receiver is further configured to receive a return operation instruction; and
the processor is further configured to acquire a menu item currently displayed on the first display screen, and jointly display a previous-level menu of the acquired menu item on the first display screen and the second display screen.

With reference to the eighth, the ninth, or the tenth possible implementation manner of the third aspect, in an eleventh possible implementation manner of the third aspect, the receiver is further configured to receive a main menu operation instruction; and
the processor is further configured to jointly display a main menu of the operation menu on the first display screen and the second display screen.

With reference to the third aspect or any one of the first to the eleventh possible implementation manners of the third aspect, in a twelfth possible implementation manner of the third aspect, the receiver is further configured to receive a switching operation instruction; and
the processor is further configured to hide icons currently displayed on the first display screen and the second display screen, and display time on the first display screen and/or the second display screen.

With reference to the third aspect or any one of the first to the twelfth possible implementation manners of the third aspect, in a thirteenth possible implementation manner of the third aspect, the encircling apparatus further includes a third display screen, and the third display screen and the second display screen are respectively disposed on two sides of the first display screen; and
that the controller is configured to jointly display the icons on the first display screen and the second display screen is specifically: the controller is configured to jointly display the icons on the first display screen, the second display screen, and the third display screen.

With reference to the third aspect or any one of the first to the thirteenth possible implementation manners of the third aspect, in a fourteenth possible implementation manner of the third aspect, the first display screen and the second display screen belong to a same display apparatus, or belong to different display apparatuses.

It may be learned from the foregoing technical solutions that, in the embodiments of the present invention, in addition to a first display unit, an extra display unit, that is, a second display unit, is further disposed by using space of an encircling apparatus, and icons are jointly displayed by using the first display unit and the second display unit. It may be learned that, in the embodiments, a display area of a display apparatus is skillfully increased, such an increase does not affect characteristics of lightness and handiness of the wearable intelligent device, an increase in a quantity of displayed icons is implemented, and a speed of locating, by a user, an icon that the user needs is improved, thereby preventing system load from increasing due to excessive user operations.

### BRIEF DESCRIPTION OF DRAWINGS

FIG. 1 is a schematic flowchart of a first embodiment of a method according to an embodiment of the present invention;
FIG. 2 is a schematic diagram of jointly displaying a menu item on a first display unit and a second display unit;
FIG. 3 is a schematic diagram of jointly displaying a menu item on a first display unit, a second display unit, and a third display unit;
FIG. 4 is a schematic flowchart of a second embodiment of a method according to an embodiment of the present invention;
FIG. 5 is a schematic diagram of a menu item jointly displayed on a first display unit and a second display unit before the menu item is moved;
FIG. 6 is a schematic diagram of a menu item jointly displayed on a first display unit and a second display unit after the menu item is moved;
FIG. 7 is a schematic flowchart of a third embodiment of a method according to an embodiment of the present invention;
FIG. 8 is a schematic diagram of jointly displaying a contact submenu item on a first display unit and a second display unit;
FIG 9 is a schematic flowchart of a fourth embodiment of a method according to an embodiment of the present invention;
FIG. 10 is a schematic structural diagram of a first embodiment of a device according to an embodiment of the present invention;
FIG. 11 is a schematic structural diagram of a second embodiment of a device according to an embodiment of the present invention;
FIG. 12 is a schematic structural diagram of a third embodiment of a device according to an embodiment of the present invention;
FIG. 13 is a schematic structural diagram of a fourth embodiment of a device according to an embodiment of the present invention;
FIG. 14 is a schematic structural diagram of a fifth embodiment of a device according to an embodiment of the present invention;
FIG. 15 is a schematic structural diagram of a sixth embodiment of a device according to an embodiment of the present invention;
FIG. 16 is a schematic structural diagram of a seventh embodiment of a device according to an embodiment of the present invention; and
FIG. 17 is a schematic structural diagram of an eighth embodiment of a device according to an embodiment of the present invention.

### DESCRIPTION OF EMBODIMENTS

A wearable intelligent device is an intelligent device that can be worn on a human body. With successive breakthroughs of technologies such as man-machine interaction and voice intelligence, wearable intelligent devices are forming a new market trend.

There are various types of wearable intelligent devices, and among the various types of wearable intelligent devices, an encircling wearable intelligent device gradually gains the popularity among consumers because the encircling wearable intelligent device is easy to remove, light, and handy, and has other characteristics. The encircling wearable intelligent device refers to an intelligent device worn on a part (for example, a part such as an arm, a wrist, a neck, a leg, or an ankle) of a human body in an encircling manner. For example, a smart watch, a smart band, and a smart headband are common encircling wearable intelligent devices. Because a property of being wearable is implemented in the encircling manner, the encircling wearable intelligent device includes an encircling apparatus that can implement an encircling function; for example, a smart watch includes an encircling watch strap.

Currently, to facilitate use of a user, the encircling wearable intelligent device generally displays icons to the user by using a display apparatus. For example, icons that have multiple intelligent functions, such as "Phone", "Messaging", and "Email" can be displayed on a display screen of a smart watch, so that the user can select an intelligent function that the user needs to implement.

However, because the encircling wearable intelligent device implements the property of being wearable in the encircling manner, the display apparatus included in the encircling wearable intelligent device is of a relatively limited size. This is because if the display apparatus is excessively large, characteristics of lightness and handiness of the encircling wearable intelligent device are inevitably affected, and practicability is poor. Because of the relatively limited size, the display apparatus can display an extremely limited quantity of icons, which causes the user to be unable to quickly locate an icon that the user needs. For example, a current smart watch generally displays only one icon on a display screen, and the user needs to continually switch an icon displayed on the display screen so as to find an icon that the user needs. Therefore, user operations become excessive, and system load increases. However, if a quantity of icons displayed on the display screen is increased, a display area for each icon becomes extremely small, and as a result the user is more likely to perform a misoperation.

In embodiments of the present invention, an icon display method of a wearable intelligent device and a related device are provided, so as to increase a quantity of icons that can be displayed on an encircling wearable intelligent device, thereby preventing system load from increasing due to excessive user operations.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

In the specification, claims, and accompanying drawings of the present invention, the terms "first", "second", "third", "fourth", and so on are intended to distinguish between similar objects but are not necessarily intended to describe a specific order or sequence. It should be understood that data termed in such a way are interchangeable in proper circumstances so that the embodiments described herein can be implemented in sequences except the sequence of content illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

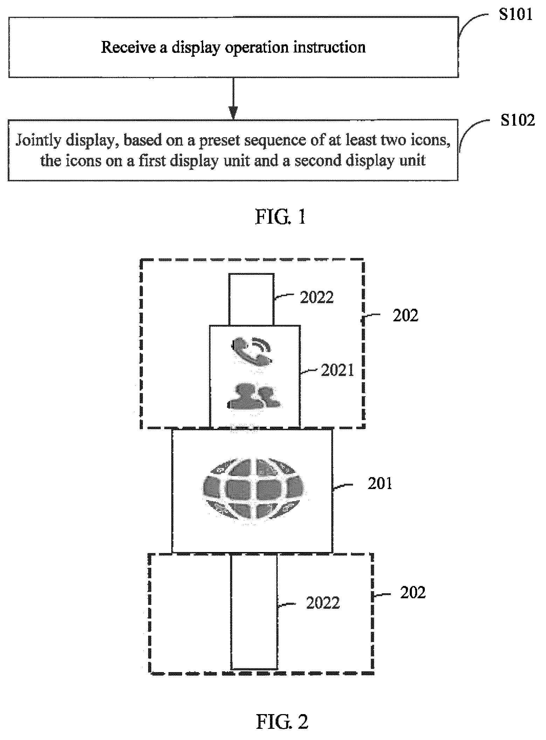

Referring to FIG. 1, an embodiment of the present invention provides a first embodiment of an icon display method of a wearable intelligent device. As shown in FIG. 2, the wearable intelligent device in this embodiment includes a first display unit 201 and an encircling apparatus 202. The encircling apparatus 202 includes a second display unit 2021. It should be noted that, FIG. 2 is a vertically expanded view of the wearable intelligent device in this embodiment.

The encircling apparatus 202 in this embodiment is configured to provide an encircling function and is specifically configured to fasten the wearable intelligent device in this embodiment on a human body in an encircling manner, for example, to fasten the wearable intelligent device in this embodiment on a part such as an arm, a wrist, a neck, a leg, or an ankle in the encircling manner.

It should be noted that, the encircling apparatus 202 in this embodiment may include only the second display unit 2021, and in this case, the encircling function is completely provided by the second display unit 2021. Alternatively, in addition to the second display unit 2021, the encircling apparatus 202 in this embodiment may further include a fastening apparatus 2022, and in this case, the second display unit 2021 and the fastening apparatus 2022 jointly provide the encircling function. The fastening apparatus 2022 may be a rope-like object, a strap-like object (for example, a band of leather or cloth), a ring-like object, or the like. In this case, the second display unit 2021 may be disposed on the fastening apparatus 2022, or an end of the second display unit 2021 is connected to an end of the fastening apparatus 2022.

This embodiment specifically includes the following steps:
S 101: Receive a display operation instruction.

The display operation instruction in this embodiment may be an instruction generated after a display operation performed on an icon by a user is detected. For example, if a power-on operation or an unlocking operation of the user is detected, or after an operation of quitting an application by the user is detected, the display operation instruction is generated.

The display operation instruction in this embodiment may alternatively be an instruction generated after it is detected that a preset condition of displaying an icon is met. For example, the display operation instruction is generated after it is detected that the user does not perform any operation on the wearable intelligent device in this embodiment within a preset time.

S102: Jointly display, based on a preset sequence of at least two icons, the icons on the first display unit 201 and the second display unit 2021.

Jointly displaying the icons on the two display units (the first display unit 201 and the second display unit 2021) in this embodiment means that the two display units separately display a part of one or more icons according to a position relationship of the two display units, and if the two display units are put together, the one or more complete icons are displayed.

The at least two icons described in this embodiment of the present invention may be functional icons, and a corresponding function can be implemented by performing a select operation on the icons, such as an application icon and a shortcut icon; or the at least two icons may be identifying icons, that is, icons that only function as identifiers. Certainly, the icons in this embodiment of the present invention may be in another form, and this embodiment of the present invention sets no limitation thereto.

The at least two icons described in this embodiment of the present invention may be independent icons, or may be icons that have a specific association. For example, in an optional manner, the icons in this embodiment of the present invention are menu items of an operation menu. For example, as shown in FIG. 2, a contact menu item and a call record menu item are displayed on the second display unit 2021, and a browser menu item is displayed on the first display unit 201. Actually, the contact menu item, the call record menu item, and the browser menu item are menu items of an operation menu.

Jointly displaying the icons on the two display units in this embodiment is specifically jointly displaying the icons according to the preset sequence of the at least two icons. For example, when the icons are specifically menu items of an operation menu, and a preset sequence of the menu items of the operation menu is: the call record menu item, the contact menu item, and the browser menu item, as shown in FIG. 2, the foregoing three menu items are sequentially displayed on the two display units in a top-to-bottom sequence.

It may be understood that, a quantity of at least two icons described in this embodiment is not limited to a quantity of icons jointly displayed on the first display unit 201 and the second display unit 2021 in this case. Actually, the quantity of currently displayed icons may be set according to display areas of the first display unit 201 and the second display unit 2021. A preferred manner is displaying only one icon on the first display unit 201.

It may be learned from the foregoing technical solution that, in this embodiment, in addition to the first display unit 201, an extra display unit, that is, the second display unit 2021, is further disposed by using space of the encircling apparatus, and icons are jointly displayed by using the first display unit 201 and the second display unit 2021. It may be learned that, in this embodiment, a display area of a display apparatus is skillfully increased, such an increase does not affect characteristics of lightness and handiness of the wearable intelligent device, an increase in a quantity of displayed icons is implemented, and a speed of locating, by a user, an icon that the user needs is improved, thereby preventing system load from increasing due to excessive user operations.

The wearable intelligent device in this embodiment may be an intelligent device worn on a part (for example, a part such as an arm, a wrist, a neck, a leg, or an ankle) of a human body in the encircling manner, such as a smart watch, a smart band, or a smart headband. This embodiment may be executed by the wearable intelligent device in this embodiment, and may be specifically executed by a processing unit included in the wearable intelligent device.

In this embodiment, the first display unit 201 and the second display unit 2021 may belong to a same display apparatus. In this case, the display apparatus to which the first display unit 201 and the second display unit 2021 belong may be a display apparatus of an irregular shape shown in FIG. 2, or certainly, may be a display apparatus of a regular shape, and this embodiment of the present invention sets no limitation thereto.

The first display unit 201 and the second display unit 2021 may alternatively belong to different display apparatuses. In this case, as shown in FIG. 2, a display apparatus to which the first display unit 201 belongs is connected to a display apparatus to which the second display unit 2021 belongs, and the two display apparatuses may be specifically connected by using an interface, so that data exchange can be performed between the two display apparatuses. Certainly, the display apparatus to which the first display unit 201 belongs may not be connected to the display apparatus to which the second display unit 2021 belongs, and this embodiment of the present invention sets no limitation thereto.

In this embodiment of the present invention, both the first display unit 201 and the second display unit 2021 may be consist of use a material such as an LED, an E_link, an OLED, or an LCD. Considering costs, the second display unit 2021 in this embodiment of the present invention may use a cost-effective material, for example, an LED dot matrix. Alternatively, the second display unit 2021 may have only a display function, and does not have a touchscreen function. To be more in conformity with somatology design principles, the second display unit 2021 in this embodiment of the present invention may be arc-shaped. In this case, the second display unit 2021 may use a flexible material, such as an E_link or an OLED.

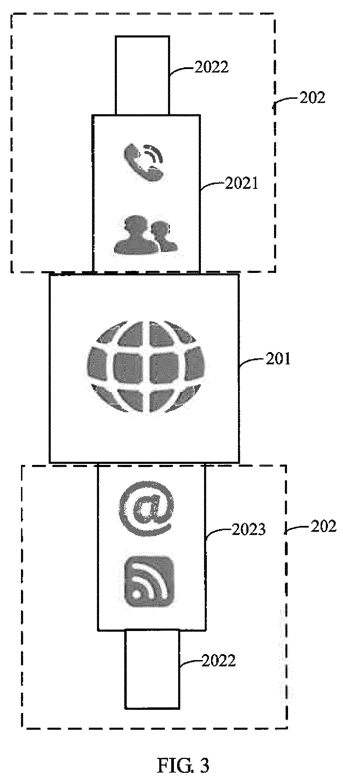

In this embodiment of the present invention, not only the first display unit 201 and the second display unit 2021 are used to jointly display the icons, and more display units may be disposed to jointly display the icons. For example, as shown in FIG. 3, in addition to the second display unit 2021, the encircling apparatus 202 in this embodiment of the present invention may further include a third display unit 2023. The second display unit 2021 and the third display unit 2023 are respectively disposed on two sides of the first display unit 201. Therefore, in step S102 of this embodiment, specifically, the icons are jointly displayed, based on the preset sequence of the at least two icons, on the first display unit 201, the second display unit 2021, and the third display unit 2023. For example, when the icons are specifically menu items of an operation menu, as shown in FIG. 3, a call record menu item, a contact menu item, a browser menu item, an email menu item, and a wireless network menu item are jointly displayed on the first display unit 201, the second display unit 2021, and the third display unit 2023.

It should be noted that, in this case, the encircling apparatus 202 may include only the second display unit 2021 and the third display unit 2023, and in this case, the encircling function is completely provided by the second display unit 2021 and the third display unit 2023. Alternatively, in addition to the second display unit 2021 and the third display unit 2023, the encircling apparatus 202 in this embodiment may further include the fastening apparatus 2022, and in this case, the second display unit 2021, the third display unit 2023, and the fastening apparatus 2022 jointly provide the encircling function. In this case, the third display unit 2023 may be disposed on the fastening apparatus 2022, or an end of the third display unit 2023 is connected to an end of the fastening apparatus 2022. In addition, the first display unit 201, the second display unit 2021, and the third display unit 2023 may belong to a same display apparatus, or may respectively belong to different display apparatuses. Considering costs, the third display unit 2023 in this embodiment of the present invention may use a cost-effective material. Alternatively, the third display unit 2023 may have only a display function, and does not have a touchscreen function. To be more in conformity with somatology design principles, the third display unit 2023 in this embodiment of the present invention may be arc-shaped. In this case, the third display unit 2023 may use a flexible material.

In this embodiment, jointly displaying icons by using two display units is specifically described. In addition, this embodiment of the present invention further provides a process of performing a further operation on the displayed icons. For example, in this embodiment of the present invention, an operation of moving the displayed icons may further be performed, and the following describes, by using a specific example, a process of performing an operation of moving icons.

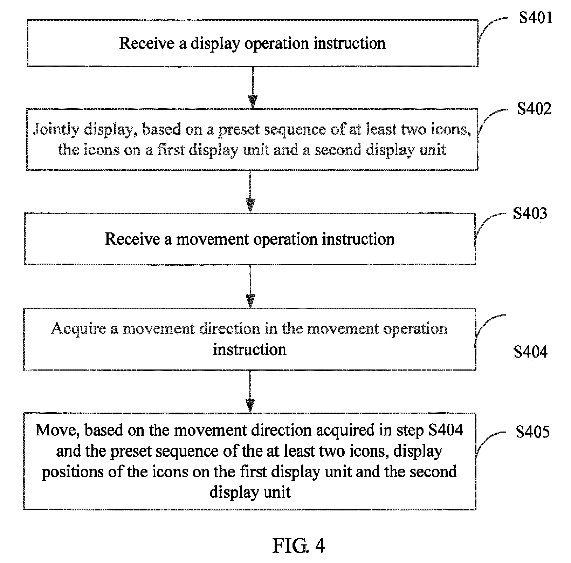

Referring to FIG. 4, an embodiment of the present invention provides a second embodiment of an icon display method of a wearable intelligent device. For better description of this embodiment, this embodiment is described by using the wearable intelligent device shown in FIG. 2 as an example, that is, the wearable intelligent device in this embodiment includes a first display unit 201 and an encircling apparatus 202, where the encircling apparatus 202 includes a second display unit 2021 and a fastening apparatus 2022.

This embodiment specifically includes the following steps:
S401: Receive a display operation instruction.
S402: Jointly display, based on a preset sequence of at least two icons, the icons on the first display unit 201 and the second display unit 2021.

If the icons in this embodiment are specifically menu items of an operation menu, after this step is performed, the menu items of the operation menu are jointly displayed on the first display unit 201 and the second display unit 2021, as shown in FIG. 2.

Step S401 and Step S402 are similar to step S101 and step S102 in the first embodiment of the method. For related information, refer to step S101 and step S102, and details are not described herein again.

S403: Receive a movement operation instruction.

The movement operation instruction in this embodiment may be an instruction generated after a movement operation performed on an icon by a user is detected.

For example, the movement operation instruction in this embodiment may be an instruction generated after a sliding operation on the first display unit 201 or the second display unit 2021 is detected. If both the first display unit 201 and the second display unit 2021 have a touchscreen function, and both the display units can respond to a sliding operation of the user, the movement operation instruction is generated after it is detected that the user performs a sliding operation on either display unit of the two display units or concurrently performs a sliding operation on the two display units. If only the first display unit 201 has the touchscreen function and the second display unit 2021 does not have the touchscreen function, or the second display unit 2021 cannot respond to a sliding operation of the user because of a system setting, in this case, the movement operation instruction is generated after it is detected that the user performs a sliding operation on the first display unit 201.

If the encircling apparatus 202 in this embodiment further includes a third display unit 2023, the movement operation instruction may be an instruction generated after a sliding operation on any display unit of the first display unit 201, the second display unit 2021, and the third display unit 2023 is detected.

In addition to a sliding operation, the movement operation instruction in this embodiment may alternatively be an instruction generated after another form of operation is detected. For example, the movement operation instruction may be an instruction generated after an operation of selecting a target icon on the second display unit 2021 is detected, and the movement operation instruction includes the target icon. Selecting the target icon by the user indicates that the user intends to move the target icon from the second display unit 2021 to the first display unit 201.

Alternatively, the wearable intelligent device in this embodiment may further include a mechanical setting apparatus, and the movement operation instruction may be an instruction generated after an operation on the mechanical setting apparatus is detected. For example, the mechanical setting apparatus may be a mechanical button, and different mechanical buttons may be set to respectively correspond to different movement operations. For example, mechanical buttons are set to respectively correspond to upward movement and downward movement. Alternatively, different positions of a mechanical button may be set to correspond to different movement operations, or pressing a mechanical button with different strengths and in different directions may be set to correspond to different movement operations. For another example, the mechanical setting apparatus may also be a mechanical lever, and the mechanical lever being shifted to different positions respectively correspond to different movement operations. Certainly, in addition to the mechanical button and the mechanical lever, the mechanical setting apparatus in this embodiment of the present invention may also be another form of mechanical apparatus that only needs to be capable of receiving a setting operation. It should be additionally noted that, the mechanical setting apparatus in this embodiment of the present invention may be an existing mechanical apparatus of mechanical setting apparatuses, or may be a newly-added mechanical apparatus, and this embodiment of the present invention sets no limitation thereto.

The following describes a position at which the foregoing mechanical setting apparatus is disposed. The foregoing mechanical setting apparatus may be disposed on the wearable intelligent device in this embodiment of the present invention, for example, the foregoing mechanical setting apparatus is disposed on the first display unit 201 or the second display unit 2021. For example, when the wearable intelligent device is a smart watch, a mechanical button or a mechanical lever may be disposed on a side face of a watch dial. The foregoing mechanical setting apparatus may also not be disposed on the wearable intelligent device in this embodiment of the present invention, that is, the foregoing mechanical setting apparatus is not physically connected to the wearable intelligent device. In this case, the mechanical setting apparatus may be connected to the wearable intelligent device by using a wireless network.

S404: Acquire a movement direction in the movement operation instruction.

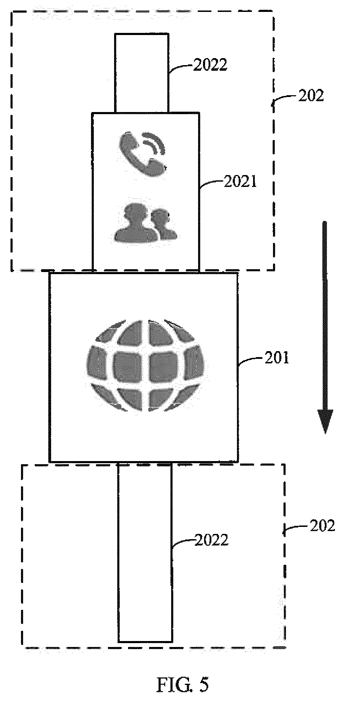

The movement operation instruction includes the movement direction of moving the icons. If the icons in this embodiment are specifically menu items of an operation menu, as shown in FIG 5, after it is detected that the user performs a downward sliding operation or presses a mechanical button downwards, a movement operation instruction with a downward movement direction is generated, which indicates that the menu items need to be moved downwards.

S405: Move, based on the movement direction acquired in step S404 and the preset sequence of the at least two icons, display positions of the icons on the first display unit 201 and the second display unit 2021.

Movement of the display positions of the icons on the first display unit 201 and the second display unit 2021 in this step is actually in a linkage manner.

A preferred manner is that a distance value of movement of the icons on the first display unit 201 is equal to a distance value of movement of the icons on the second display unit 2021. Certainly, because the first display unit 201 and the second display unit 2021 may be different in a display unit size and shape, distance values of movement of the icons on the two display units may be different, and this embodiment of the present invention sets no limitation thereto.

The following specifically describes this step by using an example that the icons are specifically menu items of an operation menu. If a preset sequence of the menu items of the operation menu is: a call record menu item, a contact menu item, a browser menu item, an email menu item, and a wireless network menu item. Before the user performs a sliding operation, as shown in FIG. 5, the call record menu item and the contact menu item are displayed on the second display unit 2021, and the browser menu item is displayed on the first display unit 201.

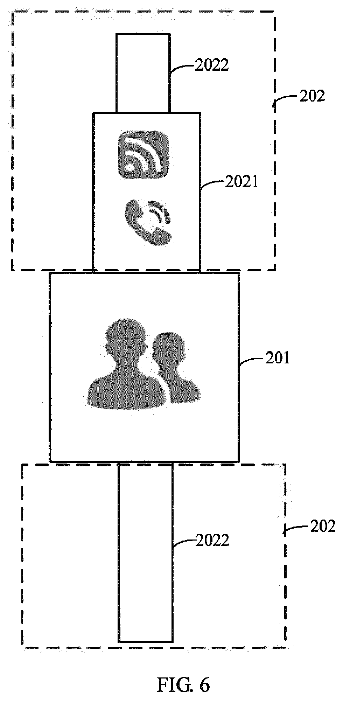

If the movement direction acquired in step S403 is downward, the call record menu item, the contact menu item, the browser menu item, the email menu item, and the wireless network menu item are moved downwards according to the foregoing preset sequence in this step. In this case, as shown in FIG. 6, the browser menu item is moved out of the first display unit 201, the contact menu item is moved from the second display unit 2021 to the first display unit 201, and the wireless network menu item is moved, to the second display unit 2021, from an area that is not displayed. Therefore, after this step, the contact menu item is displayed on the first display unit 201, and the call record menu item and the wireless network menu item are displayed on the second display unit 2021.

It should be noted that, in specific implementation of this step, to-be-displayed positions of the icons on the first display unit 201 and the second display unit 2021 may be calculated according to the acquired movement direction and the preset sequence of the icons, and the icons may be rearranged according to the to-be-displayed positions obtained by calculation.

In this embodiment, a parameter value in the movement operation instruction may further be acquired in step S404, and in this case, the distance value of movement of the icons on the first display unit 201 or the second display unit 2021 is corresponding to the acquired parameter value. For example, the parameter value may be a time length, a sliding distance, or the like of a detected sliding operation. Therefore, a longer time length or a longer sliding distance of the detected sliding operation indicates a larger final movement distance of the icons.

In this embodiment, if the movement operation instruction is the instruction generated after the operation of selecting the target icon on the second display unit 2021 is detected, this embodiment may further include acquiring the target icon in the movement operation instruction, and step S405 is specifically: moving, based on the movement direction acquired in step S404 and the preset sequence of the at least two icons, the display positions of the icons on the first display unit 201 and the second display unit 2021, where the target icon is displayed on the first display unit 201.

It may be learned from the foregoing technical solution that, this embodiment mainly explains that after the icons are jointly displayed by using the first display unit 201 and the second display unit 2021, linkage can be implemented between the icons displayed on the first display unit 201 and the second display unit 2021.

In this embodiment of the present invention, when the icons are specifically menu items of an operation menu, at least one of operation processes of entering a next-level menu of a menu item, returning to a previous-level menu, and returning to a main menu may further be executed by means of a specific operation. The following uses an embodiment to describe a situation in which the foregoing three operation processes are concurrently executed.

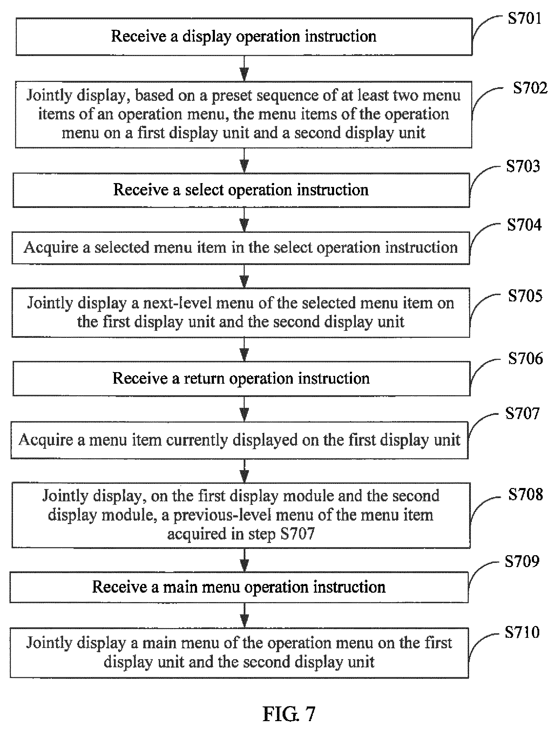

Referring to FIG. 7, an embodiment of the present invention provides a third embodiment of an icon display method of a wearable intelligent device. For better description of this embodiment, this embodiment is described by using the wearable intelligent device shown in FIG. 2 as an example, that is, the wearable intelligent device in this embodiment includes a first display unit 201 and an encircling apparatus 202, where the encircling apparatus 202 includes a second display unit 2021 and a fastening apparatus 2022. In addition, in this embodiment, an icon is specifically a menu item of an operation menu.

This embodiment specifically includes the following steps:
S701: Receive a display operation instruction.
S702: Jointly display, based on a preset sequence of at least two menu items of the operation menu, the menu items of the operation menu on the first display unit 201 and the second display unit 2021.
Step S701 and Step S702 are similar to step S101 and step S102 in the first embodiment of the method. For related information, refer to step S101 and step S102, and details are not described herein again.
S703: Receive a select operation instruction.

The select operation instruction in this embodiment may be an instruction generated after a select operation on a menu item on the first display unit 201 or the second display unit 2021 is detected. The select operation may be an operation such as a tap, a double-tap, a touch & hold, or a slide in a specific direction, and this embodiment of the present invention sets no limitation thereto.

If both the first display unit 201 and the second display unit 2021 have a touchscreen function, and both the display units can respond to a select operation of a user, the select operation instruction is generated after it is detected that the user performs a select operation on either display unit of the two display units or concurrently performs a select operation on the two display units. If only the first display unit 201 has the touchscreen function and the second display unit 2021 does not have the touchscreen function, or the second display unit 2021 cannot respond to a select operation of the user because of a system setting, in this case, the select operation instruction is generated after it is detected that the user performs a select operation on the first display unit 201.

In this embodiment, considering a purpose of avoiding a misoperation of the user, the first display unit 201 may further be set as a to-be-selected area, only one menu item is displayed on the first display unit 201, and the select operation instruction is generated only after a select operation on the menu item on the first display unit 201 is detected.

S704: Acquire a selected menu item in the select operation instruction.

The select operation instruction includes the selected menu item. Actually, after a select operation performed on the menu item by the user is detected, the menu item that is selected is the selected menu item, and the select operation instruction that includes the selected menu item is generated, which indicates that the user selects the menu item. The selected menu item may be represented by an identifier of the menu item.

S705: Jointly display a next-level menu of the selected menu item on the first display unit 201 and the second display unit 2021.

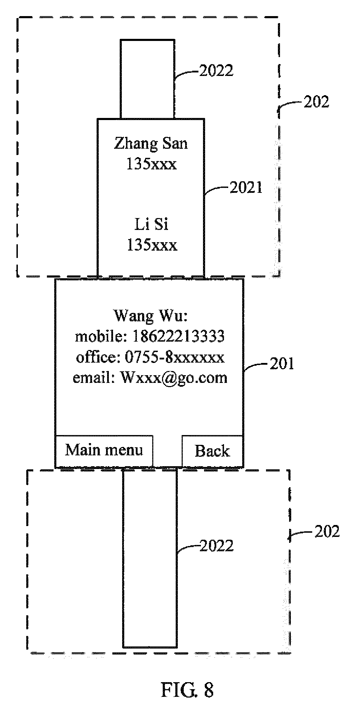

The following describes this step by using a specific example. If the menu items jointly displayed by the first display unit 201 and the second display unit 2021 are shown in FIG. 6, and when it is detected that the user taps a contact menu item on the first display unit 201, because the contact menu item further has a next-level menu, as shown in FIG. 8, the next-level menu of the contact menu item, that is, contact submenu items, is jointly displayed on the first display unit 201 and the second display unit 2021.

In this embodiment, if the selected menu item does not have a next-level menu, no operation may be performed, or the user may be prompted that information related to a next-level menu does not exist.

S706: Receive a return operation instruction.

The return operation instruction in this embodiment may be an instruction generated after a return operation on the first display unit 201 and/or the second display unit 2021 is detected.

For example, as shown in FIG. 8, a return area may be displayed on the first display unit 201, and the return operation instruction is generated after it is detected that the user selects the return area. Alternatively, the return operation instruction may be generated when it is detected that the user slides in a specific direction. For example, in this embodiment of the present invention, the following may be set: when it is detected that the user slides to the left, the select operation instruction is generated, and therefore a next-level menu is entered; when it is detected that the user slides to the right, the return operation instruction is generated, and therefore a previous-level menu returns. Alternatively, a specific mechanical button may be disposed on the wearable intelligent device and is configured to receive a return operation of the user. For example, a mechanical button is disposed at a specific position (for example, a left bottom) on the first display unit, and when it is detected that the mechanical button is pressed, the return operation is detected.

S707: Acquire a menu item currently displayed on the first display unit 201.

The displayed menu item may be represented by an identifier of the menu item.

S708: Jointly display, on the first display unit 201 and the second display unit 2021, a previous-level menu of the menu item acquired in step S707.

The following describes this step by using a specific example. If the menu items jointly displayed on the first display unit 201 and the second display unit 2021 are shown in FIG. 8, and after it is detected that the user taps the return area, because a contact submenu item displayed on the first display unit 201 has a previous-level menu, the previous-level menu of the contact submenu item is jointly displayed on the first display unit 201 and the second display unit 2021, as shown in FIG. 6.

In this embodiment, if the menu item acquired in step S707 does not have a previous-level menu, no operation may be performed, or the user may be prompted that information related to a previous-level menu does not exist.

S709: Receive a main menu operation instruction.

The main menu operation instruction in this embodiment may be an instruction generated after an operation of returning to a main menu on the first display unit 201 and/or the second display unit 2021 is detected.

For example, as shown in FIG. 8, a main menu area may be displayed on the first display unit 201, and the main menu operation instruction is generated after it is detected that the user selects the main menu area. Alternatively, a specific mechanical button may be disposed on the wearable intelligent device and is configured to receive a return operation of the user. For example, a mechanical button is disposed at a specific position (for example, a right bottom) on the first display unit, and when it is detected that the mechanical button is pressed, the operation of returning to the main menu is detected.

S710: Jointly display a main menu of the operation menu on the first display unit 201 and the second display unit 2021.

The following describes this step by using a specific example. If the menu items jointly displayed on the first display unit 201 and the second display unit 2021 are shown in FIG. 8, and after it is detected that the user taps the main menu area, the main menu of the operation menu is jointly displayed on the first display unit 201 and the second display unit 2021, as shown in FIG. 2.

It may be learned from the foregoing technical solution that, this embodiment mainly explains that operation processes of entering a next-level menu, returning to a previous-level menu, and returning to the main menu can be executed after the menu items of the operation menu are jointly displayed on the first display unit 201 and the second display unit 2021.

It should be noted that, the three operation processes of entering the next-level menu, returning to the previous-level menu, and returning to the main menu are concurrently executed in this embodiment, but in another embodiment, only one or more operation processes of the foregoing three operation processes may be executed. In addition, a sequence of performing steps S703, S706, and S709 is also not limited in this embodiment.

Because most wearable intelligent devices (especially for a smart watch) have a function of displaying time, the wearable intelligent device in this embodiment of the present invention may further switch between an intelligent function and a time display function. The following makes description by using an embodiment.

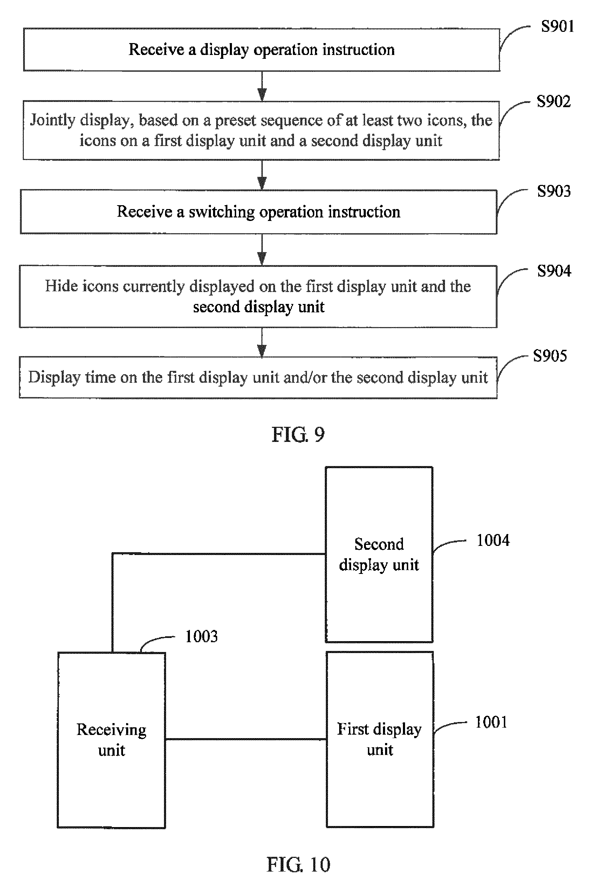

Referring to FIG. 9, an embodiment of the present invention provides a fourth embodiment of an icon display method of a wearable intelligent device. For better description of this embodiment, this embodiment is described by using the wearable intelligent device shown in FIG 2 as an example, that is, the wearable intelligent device in this embodiment includes a first display unit 201 and an encircling apparatus 202, where the encircling apparatus 202 includes a second display unit 2021 and a fastening apparatus 2022.

This embodiment specifically includes the following steps:
S901: Receive a display operation instruction.
S902: Jointly display, based on a preset sequence of at least two icons, the icons on the first display unit 201 and the second display unit 2021.
Step S901 and Step S902 are similar to step S101 and step S102 in the first embodiment of the method. For related information, refer to step S101 and step S102, and details are not described herein again.
S903: Receive a switching operation instruction.

The switching operation instruction in this embodiment may be an instruction generated after a time switching operation of a user is detected. For example, a specific mechanical button may be disposed on the wearable intelligent device and is configured to receive a time switching operation of the user. For example, a mechanical button is disposed at a specific position on the first display unit, and when it is detected that the mechanical button is pressed, the time switching operation is detected.

The switching operation instruction in this embodiment may alternatively be an instruction generated after it is detected that a preset condition of switching time is met. For example, the switching operation instruction is generated after it is detected that the user does not perform any operation on the device in this embodiment within a preset time.

S904: Hide icons currently displayed on the first display unit 201 and the second display unit 2021.

Hiding the icons may also be not displaying the icons any more.

S905: Display time on the first display unit 201 and/or the second display unit 2021.

In this case, except a part in which time is displayed, other parts on the first display unit 201 and/or the second display unit 2021 may be made to be in a black screen state.

A sequence of performing step S904 and step S905 is not limited.

It may be learned from the foregoing technical solution that, this embodiment mainly explains that switching to a time display function can be performed after the icons are jointly displayed by using the first display unit 201 and the second display unit 2021. After this embodiment, the icons may further be redisplayed by means of a specific operation.

The foregoing describes an embodiment of an icon display method in the embodiments of the present invention, and the following describes an embodiment of a wearable intelligent device in the embodiments of the present invention from the perspective of a modular function entity.

Referring to FIG. 10, an embodiment of the present invention provides a first embodiment of a wearable intelligent device. In this embodiment, the device includes a first display unit 1001, an encircling apparatus 1002 (not shown), and a receiving unit 1003.

The encircling apparatus 1002 is configured to fasten the device on a human body in an encircling manner, and the encircling apparatus 1002 includes a second display unit 1004. The encircling apparatus 1002 in this embodiment is configured to provide an encircling function and is specifically configured to fasten the wearable intelligent device in this embodiment on a human body in the encircling manner, for example, to fasten the wearable intelligent device in this embodiment on a part such as an arm, a wrist, a neck, a leg, or an ankle in the encircling manner.

It should be noted that, the encircling apparatus 1002 in this embodiment may include only the second display unit 1004, and in this case, the encircling function is completely provided by the second display unit 1004. Alternatively, in addition to the second display unit 1004, the encircling apparatus 1002 in this embodiment may further include a fastening apparatus, and in this case, the second display unit 1004 and the fastening apparatus jointly provide the encircling function. The fastening apparatus may be a rope-like object, a strap-like object (for example, a band of leather or cloth), a ring-like object, or the like. In this case, the second display unit 1004 may be disposed on the fastening apparatus, or an end of the second display unit 1004 is connected to an end of the fastening apparatus.

The receiving unit 1003 is configured to receive a display operation instruction.

The display operation instruction in this embodiment may be an instruction generated after a display operation performed on an icon by a user is detected. For example, if a power-on operation or an unlocking operation of the user is detected, or after an operation of quitting an application by the user is detected, the display operation instruction is generated.

The display operation instruction in this embodiment may alternatively be an instruction generated after it is detected that a preset condition of displaying an icon is met. For example, the display operation instruction is generated after it is detected that the user does not perform any operation on the wearable intelligent device in this embodiment within a preset time.

The first display unit 1001 and the second display unit 1004 are configured to: based on a preset sequence of at least two icons, jointly display the icons on the first display unit 1001 and the second display unit 1004.

Jointly displaying the icons on the two display units (the first display unit 1001 and the second display unit 1004) in this embodiment means that the two display units separately display a part of one or more icons according to a position relationship of the two display units, and if the two display units are put together, the one or more complete icons are displayed.

The at least two icons described in this embodiment of the present invention may be functional icons, and a corresponding function can be implemented by performing a select operation on the icons, such as an application icon and a shortcut icon; or the at least two icons may be identifying icons, that is, icons that only function as identifiers. Certainly, the icons in this embodiment of the present invention may be in another form, and this embodiment of the present invention sets no limitation thereto.

The at least two icons described in this embodiment of the present invention may be independent icons, or may be icons that have a specific association. For example, in an optional manner, the icons in this embodiment of the present invention are menu items of an operation menu. For example, a contact menu item and a call record menu item are displayed on the second display unit 1004, and a browser menu item is displayed on the first display unit 1001. Actually, the contact menu item, the call record menu item, and the browser menu item are menu items of an operation menu.

Jointly displaying the icons on the two display units in this embodiment is specifically jointly displaying the icons according to the preset sequence of the at least two icons. For example, when the icons are specifically menu items of an operation menu, and a preset sequence of the menu items of the operation menu is: the call record menu item, the contact menu item, and the browser menu item, the foregoing three menu items are sequentially displayed on the two display units in a top-to-bottom sequence.

It may be understood that, a quantity of at least two icons described in this embodiment is not limited to a quantity of icons jointly displayed on the first display unit 1001 and the second display unit 1004 in this case. Actually, the quantity of currently displayed icons may be set according to display areas of the first display unit 1001 and the second display unit 1004. A preferred manner is displaying only one icon on the first display unit 1001.

It may be learned from the foregoing technical solution that, in this embodiment, in addition to the first display unit 1001, an extra display unit, that is, the second display unit 1004, is further disposed by using space of the encircling apparatus, and icons are jointly displayed by using the first display unit 1001 and the second display unit 1004. It may be learned that, in this embodiment, a display area of a display apparatus is skillfully increased, such an increase does not affect characteristics of lightness and handiness of the wearable intelligent device, an increase in a quantity of displayed icons is implemented, and a speed of locating, by a user, an icon that the user needs is improved, thereby preventing system load from increasing due to excessive user operations.

The wearable intelligent device in this embodiment may be an intelligent device worn on a part (for example, a part such as an arm, a wrist, a neck, a leg, or an ankle) of a human body in the encircling manner, such as a smart watch, a smart band, or a smart headband. This embodiment may be executed by the wearable intelligent device in this embodiment, and may be specifically executed by a processing unit included in the wearable intelligent device.

In this embodiment, the first display unit 1001 and the second display unit 1004 may belong to a same display apparatus. In this case, the display apparatus to which the first display unit 1001 and the second display unit 1004 belong may be a display apparatus of an irregular shape, or certainly, may be a display apparatus of a regular shape, and this embodiment of the present invention sets no limitation thereto.

The first display unit 1001 and the second display unit 1004 may alternatively belong to different display apparatuses. In this case, a display apparatus to which the first display unit 1001 belongs is connected to a display apparatus to which the second display unit 1004 belongs, and the two display apparatuses may be specifically connected by using an interface, so that data exchange can be performed between the two display apparatuses. Certainly, the display apparatus to which the first display unit 1001 belongs may not be connected to the display apparatus to which the second display unit 1004 belongs, and this embodiment of the present invention sets no limitation thereto.

In this embodiment of the present invention, both the first display unit 1001 and the second display unit 1004 may use a material such as an LED, an E_link, an OLED, or an LCD. Considering costs, the second display unit 1004 in this embodiment of the present invention may use a cost-effective material, for example, an LED dot matrix. Alternatively, the second display unit 1004 may have only a display function, and does not have a touchscreen function. To be more in conformity with somatology design principles, the second display unit 1004 in this embodiment of the present invention may be arc-shaped. In this case, the second display unit 1004 may use a flexible material, such as an E_link or an OLED.

In this embodiment of the present invention, not only the first display unit 1001 and the second display unit 1004 are used to jointly display the icons, and more display units may be disposed to jointly display the icons. For example, in addition to the second display unit 1004, the encircling apparatus 1002 in this embodiment of the present invention may further include a third display unit. The second display unit 1004 and the third display unit are respectively disposed on two sides of the first display unit 1001. In addition, the first display unit 1001, the second display unit 1004, and the third display unit are configured to jointly display the icons.

It should be noted that, in this case, the encircling apparatus 1002 may include only the second display unit 1004 and the third display unit, and in this case, the encircling function is completely provided by the second display unit 1004 and the third display unit. Alternatively, in addition to the second display unit 1004 and the third display unit, the encircling apparatus 1002 in this embodiment may further include the fastening apparatus, and in this case, the second display unit 1004, the third display unit, and the fastening apparatus jointly provide the encircling function. In this case, the third display unit may be disposed on the fastening apparatus, or an end of the third display unit is connected to an end of the fastening apparatus. In addition, the first display unit 1001, the second display unit 1004, and the third display unit may belong to a same display apparatus, or may respectively belong to different display apparatuses. Considering costs, the third display unit in this embodiment of the present invention may use low cost-effective material. Alternatively, the third display unit may have only a display function, and does not have a touchscreen function. To be more in conformity with somatology design principles, the third display unit in this embodiment of the present invention may be arc-shaped. In this case, the third display unit may use a flexible material.

In this embodiment, jointly displaying icons by using two display units is specifically described. In addition, this embodiment of the present invention further provides a process of performing a further operation on the displayed icons. For example, in this embodiment of the present invention, an operation of moving the displayed icons may further be performed, and the following describes, by using a specific example, a process of performing an operation of moving icons.

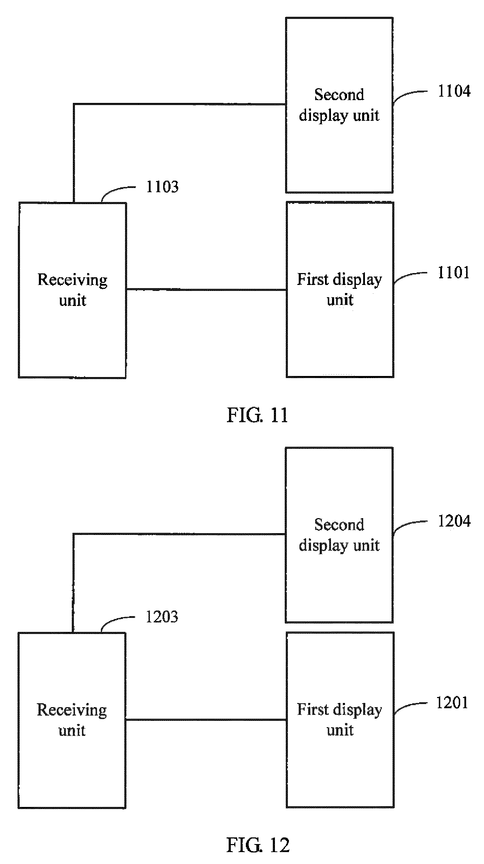

Referring to FIG. 11, an embodiment of the present invention provides a second embodiment of a wearable intelligent device. In this embodiment, the device includes a first display unit 1101, an encircling apparatus 1102 (not shown), and a receiving unit 1103. The encircling apparatus 1102 is configured to fasten the device on a human body in an encircling manner. The encircling apparatus 1102 includes a second display unit 1104.

The receiving unit 1103 is configured to receive a display operation instruction.

The first display unit 1101 and the second display unit 1104 are configured to: based on a preset sequence of at least two icons, jointly display the icons on the first display unit 1101 and the second display unit 1104.

The receiving unit 1103 is further configured to receive a movement operation instruction, and acquire a movement direction in the movement operation instruction.

The movement operation instruction in this embodiment may be an instruction generated after a movement operation performed on an icon by a user is detected.

For example, the movement operation instruction in this embodiment may be an instruction generated after a sliding operation on the first display unit 1101 or the second display unit 1104 is detected. If both the first display unit 1101 and the second display unit 1104 have a touchscreen function, and both the display units can respond to a sliding operation of the user, the movement operation instruction is generated after it is detected that the user performs a sliding operation on either display unit of the two display units or concurrently performs a sliding operation on the two display units. If only the first display unit 1101 has the touchscreen function and the second display unit 1104 does not have the touchscreen function, or the second display unit 1104 cannot respond to a sliding operation of the user because of a system setting, in this case, the movement operation instruction is generated after it is detected that the user performs a sliding operation on the first display unit 1101.

If the encircling apparatus 1102 in this embodiment further includes a third display unit, the movement operation instruction may be an instruction generated after a sliding operation on any display unit of the first display unit 1101, the second display unit 1104, and the third display unit is detected.

In addition to a sliding operation, the movement operation instruction in this embodiment may alternatively be an instruction generated after another form of operation is detected. For example, the movement operation instruction may be an instruction generated after an operation of selecting a target icon on the second display unit 1104 is detected, and the movement operation instruction includes the target icon. Selecting the target icon by the user indicates that the user intends to move the target icon from the second display unit 1104 to the first display unit 1101.

Alternatively, the wearable intelligent device in this embodiment may further include a mechanical setting apparatus, and the movement operation instruction may be an instruction generated after an operation on the mechanical setting apparatus is detected. For example, the mechanical setting apparatus may be a mechanical button, and different mechanical buttons may be set to respectively correspond to different movement operations. For example, mechanical buttons are set to respectively correspond to upward movement and downward movement. Alternatively, different positions of a mechanical button may be set to correspond to different movement operations, or pressing a mechanical button with different strengths and in different directions may be set to correspond to different movement operations. For another example, the mechanical setting apparatus may also be a mechanical lever, and the mechanical lever being shifted to different positions respectively correspond to different movement operations. Certainly, in addition to the mechanical button and the mechanical lever, the mechanical setting apparatus in this embodiment of the present invention may also be another form of mechanical apparatus that only needs to be capable of receiving a setting operation. It should be additionally noted that, the mechanical setting apparatus in this embodiment of the present invention may be an existing mechanical apparatus of mechanical setting apparatuses, or may be a newly-added mechanical apparatus, and this embodiment of the present invention sets no limitation thereto.

The following describes a position at which the foregoing mechanical setting apparatus is disposed. The foregoing mechanical setting apparatus may be disposed on the wearable intelligent device in this embodiment of the present invention, for example, the foregoing mechanical setting apparatus is disposed on the first display unit 1101 or the second display unit 1104. For example, when the wearable intelligent device is a smart watch, a mechanical button or a mechanical lever may be disposed on a side face of a watch dial. The foregoing mechanical setting apparatus may also not be disposed on the wearable intelligent device in this embodiment of the present invention, that is, the foregoing mechanical setting apparatus is not physically connected to the wearable intelligent device. In this case, the mechanical setting apparatus may be connected to the wearable intelligent device by using a wireless network.

The movement operation instruction includes the movement direction of moving the icons. If the icons in this embodiment are specifically menu items of an operation menu, for example, after it is detected that the user performs a downward sliding operation or presses a mechanical button downwards, a movement operation instruction with a downward movement direction is generated, which indicates that the menu items need to be moved downwards.

The first display unit 1101 and the second display unit 1104 are further configured to: based on the movement direction acquired by the receiving unit 1103 and the preset sequence of the at least two icons, move display positions of the icons on the first display unit 1101 and the second display unit 1104.

Herein, movement of the display positions of the icons on the first display unit 1101 and the second display unit 1104 is actually in a linkage manner.

A preferred manner is that a distance value of movement of the icons on the first display unit 1101 is equal to a distance value of movement of the icons on the second display unit 1104. Certainly, because the first display unit 1101 and the second display unit 1104 may be different in a display unit size and shape, distance values of movement of the icons on the two display units may be different, and this embodiment of the present invention sets no limitation thereto.

It should be noted that, the first display unit 1101 and the second display unit 1104 may calculate to-be-displayed positions of the icons on the first display unit 1101 and the second display unit 1104 according to the acquired movement direction and the preset sequence of the icons, and rearrange the icons according to the to-be-displayed positions obtained by calculation.

In this embodiment, the receiving unit 1103 may further acquire a parameter value in the movement operation instruction, and in this case, the distance value of movement of the icons on the first display unit 1101 or the second display unit 1104 is corresponding to the acquired parameter value. For example, the parameter value may be a time length, a sliding distance, or the like of a detected sliding operation. Therefore, a longer time length or a longer sliding distance of the detected sliding operation indicates a larger final movement distance of the icons.

In this embodiment, if the movement operation instruction is the instruction generated after the operation of selecting the target icon on the second display unit 1104 is detected, the receiving unit 1103 is further configured to acquire the target icon in the movement operation instruction, and that the first display unit 1101 and the second display unit 1104 are configured to move the display positions of the icons on the first display unit 1101 and the second display unit 1104 is specifically: the first display unit 1101 and the second display unit 1104 are configured to move the display positions of the icons on the first display unit 1101 and the second display unit 1104, and display the target icon on the first display unit 1101.

It may be learned from the foregoing technical solution that, this embodiment mainly explains that after the icons are jointly displayed by using the first display unit 1101 and the second display unit 1104, linkage can be implemented between the icons displayed on the first display unit 1101 and the second display unit 1104.

In this embodiment of the present invention, when the icons are specifically menu items of an operation menu, at least one of operation processes of entering a next-level menu of a menu item, returning to a previous-level menu, and returning to a main menu may further be executed by means of a specific operation. The following uses an embodiment to describe a situation in which the foregoing three operation processes are concurrently executed.

Referring to FIG. 12, an embodiment of the present invention provides a third embodiment of a wearable intelligent device. In this embodiment, the device includes a first display unit 1201, an encircling apparatus 1202 (not shown), and a receiving unit 1203. The encircling apparatus 1202 is configured to fasten the device on a human body in an encircling manner. The encircling apparatus 1202 includes a second display unit 1204. In this embodiment, an icon is specifically a menu item of an operation menu.

The receiving unit 1203 is configured to receive a display operation instruction.

The first display unit 1201 and the second display unit 1204 are configured to: based on a preset sequence of at least two icons, jointly display the icons on the first display unit 1201 and the second display unit 1204.

The receiving unit 1203 is further configured to receive a select operation instruction, and acquire a selected menu item in the select operation instruction.

The select operation instruction in this embodiment may be an instruction generated after a select operation on a menu item on the first display unit 1201 or the second display unit 1204 is detected. The select operation may be an operation such as a tap, a double-tap, a touch & hold, or a slide in a specific direction, and this embodiment of the present invention sets no limitation thereto.

If both the first display unit 1201 and the second display unit 1204 have a touchscreen function, and both the display units can respond to a select operation of a user, the select operation instruction is generated after it is detected that the user performs a select operation on either display unit of the two display units or concurrently performs a select operation on the two display units. If only the first display unit 1201 has the touchscreen function and the second display unit 1204 does not have the touchscreen function, or the second display unit 1204 cannot respond to a select operation of the user because of a system setting, in this case, the select operation instruction is generated after it is detected that the user performs a select operation on the first display unit 1201.

In this embodiment, considering a purpose of avoiding a misoperation of the user, the first display unit 1201 may further be set as a to-be-selected area, only one menu item is displayed on the first display unit 1201, and the select operation instruction is generated only after a select operation on the menu item on the first display unit 1201 is detected.

The select operation instruction includes the selected menu item. Actually, after a select operation performed on the menu item by the user is detected, the menu item that is selected is the selected menu item, and the select operation instruction that includes the selected menu item is generated, which indicates that the user selects the menu item. The selected menu item may be represented by an identifier of the menu item.

The first display unit 1201 and the second display unit 1204 are further configured to jointly display a next-level menu of the selected menu item on the first display unit 1201 and the second display unit 1204.

In this embodiment, if the selected menu item does not have a next-level menu, no operation may be performed, or the user may be prompted that information related to a next-level menu does not exist.

The receiving unit 1203 is further configured to receive a return operation instruction and acquire a menu item currently displayed on the first display unit 1201.

The return operation instruction in this embodiment may be an instruction generated after a return operation on the first display unit 1201 and/or the second display unit 1204 is detected.

For example, a return area may be displayed on the first display unit 1201, and the return operation instruction is generated after it is detected that the user selects the return area. Alternatively, the return operation instruction may be generated when it is detected that the user slides in a specific direction. For example, in this embodiment of the present invention, the following may be set: when it is detected that the user slides to the left, the select operation instruction is generated, and therefore a next-level menu is entered; when it is detected that the user slides to the right, the return operation instruction is generated, and therefore a previous-level menu returns. Alternatively, a specific mechanical button may be disposed on the wearable intelligent device and is configured to receive a return operation of the user. For example, a mechanical button is disposed at a specific position (for example, a left bottom) on the first display unit, and when it is detected that the mechanical button is pressed, the return operation is detected.

The first display unit 1201 and the second display unit 1204 are further configured to jointly display a previous-level menu of the acquired menu item on the first display unit 1201 and the second display unit 1204.

In this embodiment, if the acquired menu item does not have a previous-level menu, no operation may be performed, or the user may be prompted that information related to a previous-level menu does not exist.

The receiving unit 1203 is further configured to receive a main menu operation instruction.

The main menu operation instruction in this embodiment may be an instruction generated after an operation of returning to a main menu on the first display unit 1201 and/or the second display unit 1204 is detected.

For example, a main menu area may be displayed on the first display unit 1201, and the main menu operation instruction is generated after it is detected that the user selects the main menu area. Alternatively, a specific mechanical button may be disposed on the wearable intelligent device and is configured to receive a return operation of the user. For example, a mechanical button is disposed at a specific position (for example, a right bottom) on the first display unit, and when it is detected that the mechanical button is pressed, the operation of returning to the main menu is detected.

The first display unit 1201 and the second display unit 1204 are further configured to jointly display the main menu of the operation menu on the first display unit 1201 and the second display unit 1204.

It may be learned from the foregoing technical solution that, this embodiment mainly explains that operation processes of entering a next-level menu, returning to a previous-level menu, and returning to the main menu can be executed after the menu items of the operation menu are jointly displayed on the first display unit 1201 and the second display unit 1204.

It should be noted that, the three operation processes of entering the next-level menu, returning to the previous-level menu, and returning to the main menu are concurrently executed in this embodiment, but in another embodiment, only one or more operation processes of the foregoing three operation processes may be executed.

Because most wearable intelligent devices (especially for a smart watch) have a function of displaying time, the wearable intelligent device in this embodiment of the present invention may further switch between an intelligent function and a time display function. The following makes description by using an embodiment.

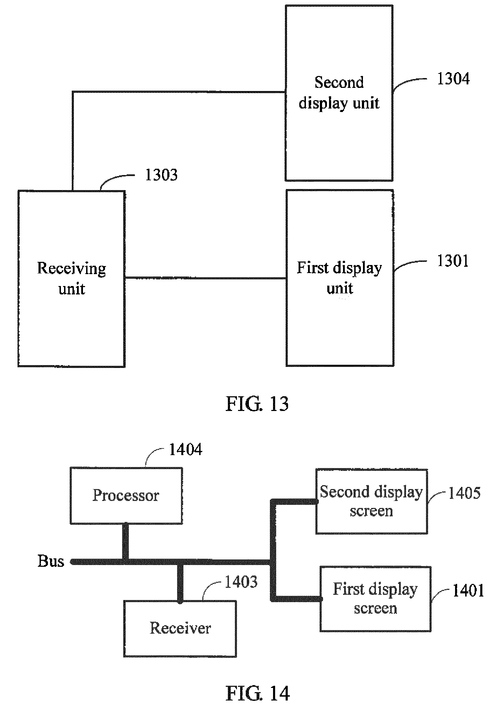

Referring to FIG. 13, an embodiment of the present invention provides a fourth embodiment of a wearable intelligent device. In this embodiment, the device includes a first display unit 1301, an encircling apparatus 1302 (not shown), and a receiving unit 1303. The encircling apparatus 1302 is configured to fasten the device on a human body in an encircling manner. The encircling apparatus 1302 includes a second display unit 1304.

The receiving unit 1303 is configured to receive a display operation instruction.

The first display unit 1301 and the second display unit 1304 are configured to: based on a preset sequence of at least two icons, jointly display the icons on the first display unit 1301 and the second display unit 1304.

The receiving unit 1303 is further configured to receive a switching operation instruction.

The switching operation instruction in this embodiment may be an instruction generated after a time switching operation of a user is detected. For example, a specific mechanical button may be disposed on the wearable intelligent device and is configured to receive a time switching operation of the user. For example, a mechanical button is disposed at a specific position on the first display unit, and when it is detected that the mechanical button is pressed, the time switching operation is detected.

The switching operation instruction in this embodiment may alternatively be an instruction generated after it is detected that a preset condition of switching time is met. For example, the switching operation instruction is generated after it is detected that the user does not perform any operation on the device in this embodiment within a preset time.

The first display unit 1301 and the second display unit 1304 are further configured to hide icons currently displayed on the first display unit 1301 and the second display unit 1304. Hiding the icons may also be not displaying the icons any more.

The first display unit 1301 and/or the second display unit 1304 are/is further configured to display time on the first display unit 1301 and/or the second display unit 1304.

Except a part in which time is displayed, other parts on the first display unit 1301 and/or the second display unit 1304 may be made to be in a black screen state.

It may be learned from the foregoing technical solution that, this embodiment mainly explains that switching to a time display function can be performed after the icons are jointly displayed by using the first display unit 1301 and the second display unit 1304. After this embodiment, the icons may further be redisplayed by means of a specific operation.

The foregoing describes an embodiment of a wearable intelligent device in the embodiments of the present invention from the perspective of a modular function entity. The following describes an embodiment of a wearable intelligent device in the embodiments of the present invention from the perspective of hardware processing.

Referring to FIG. 14, an embodiment of the present invention provides a fifth embodiment of a wearable intelligent device. In this embodiment, the device includes a first display screen 1401, an encircling apparatus 1402 (not shown), a receiver 1403, and a processor 1404.

The encircling apparatus 1402 is configured to fasten the device on a human body in an encircling manner, and the encircling apparatus 1402 includes a second display screen 1405. The encircling apparatus 1402 in this embodiment is configured to provide an encircling function and is specifically configured to fasten the wearable intelligent device in this embodiment on a human body in the encircling manner, for example, to fasten the wearable intelligent device in this embodiment on a part such as an arm, a wrist, a neck, a leg, or an ankle in the encircling manner.

It should be noted that, the encircling apparatus 1402 in this embodiment may include only the second display screen 1405, and in this case, the encircling function is completely provided by the second display screen 1405. Alternatively, in addition to the second display screen 1405, the encircling apparatus 1402 in this embodiment may further include a fastening apparatus, and in this case, the second display screen 1405 and the fastening apparatus jointly provide the encircling function. The fastening apparatus may be a rope-like object, a strap-like object (for example, a band of leather or cloth), a ring-like object, or the like. In this case, the second display screen 1405 may be disposed on the fastening apparatus, or an end of the second display screen 1405 is connected to an end of the fastening apparatus.

The receiver 1403 is configured to receive a display operation instruction.

The display operation instruction in this embodiment may be an instruction generated after a display operation performed on an icon by a user is detected. For example, if a power-on operation or an unlocking operation of the user is detected, or after an operation of quitting an application by the user is detected, the display operation instruction is generated.

The display operation instruction in this embodiment may alternatively be an instruction generated after it is detected that a preset condition of displaying an icon is met. For example, the display operation instruction is generated after it is detected that the user does not perform any operation on the wearable intelligent device in this embodiment within a preset time.

The processor 1404 is configured to: based on a preset sequence of at least two icons, jointly display the icons on the first display screen 1401 and the second display screen 1405.

Jointly displaying the icons on the two display screens (the first display screen 1401 and the second display screen 1405) in this embodiment means that the two display screens separately display a part of one or more icons according to a position relationship of the two display screens, and if the two display screens are put together, the one or more complete icons are displayed.

The at least two icons described in this embodiment of the present invention may be functional icons, and a corresponding function can be implemented by performing a select operation on the icons, such as an application icon and a shortcut icon; or the at least two icons may be identifying icons, that is, icons that only function as identifiers. Certainly, the icons in this embodiment of the present invention may be in another form, and this embodiment of the present invention sets no limitation thereto.

The at least two icons described in this embodiment of the present invention may be independent icons, or may be icons that have a specific association. For example, in an optional manner, the icons in this embodiment of the present invention are menu items of an operation menu. For example, a contact menu item and a call record menu item are displayed on the second display screen 1405, and a browser menu item is displayed on the first display screen 1401. Actually, the contact menu item, the call record menu item, and the browser menu item are menu items of an operation menu.

Jointly displaying the icons on the two display screens in this embodiment is specifically jointly displaying the icons according to the preset sequence of the at least two icons. For example, when the icons are specifically menu items of an operation menu, and a preset sequence of the menu items of the operation menu is: the call record menu item, the contact menu item, and the browser menu item, the foregoing three menu items are sequentially displayed on the two display screens in a top-to-bottom sequence.

It may be understood that, a quantity of at least two icons described in this embodiment is not limited to a quantity of icons jointly displayed on the first display screen 1401 and the second display screen 1405 in this case. Actually, the quantity of currently displayed icons may be set according to display areas of the first display screen 1401 and the second display screen 1405. A preferred manner is displaying only one icon on the first display screen 1401.

It may be learned from the foregoing technical solution that, in this embodiment, in addition to the first display screen 1401, an extra display screen, that is, the second display screen 1405, is further disposed by using space of the encircling apparatus, and icons are jointly displayed by using the first display screen 1401 and the second display screen 1405. It may be learned that, in this embodiment, a display area of a display apparatus is skillfully increased, such an increase does not affect characteristics of lightness and handiness of the wearable intelligent device, an increase in a quantity of displayed icons is implemented, and a speed of locating, by a user, an icon that the user needs is improved, thereby preventing system load from increasing due to excessive user operations.

A quantity of processors in this embodiment may be one or more, and one processor 1404 is used as an example in FIG. 14. In some embodiments of the present invention, the first display screen 1401, the receiver 1403, and the processor 1404 may be connected by using a bus or in another manner. Connection by using a bus is used as an example in FIG. 14.

The wearable intelligent device in this embodiment may be an intelligent device worn on a part (for example, a part such as an arm, a wrist, a neck, a leg, or an ankle) of a human body in the encircling manner, such as a smart watch, a smart band, or a smart headband. This embodiment may be executed by the wearable intelligent device in this embodiment, and may be specifically executed by a processor included in the wearable intelligent device.

In this embodiment, the first display screen 1401 and the second display screen 1405 may belong to a same display apparatus. In this case, the display apparatus to which the first display screen 1401 and the second display screen 1405 belong may be a display apparatus of an irregular shape, or certainly, may be a display apparatus of a regular shape, and this embodiment of the present invention sets no limitation thereto.

The first display screen 1401 and the second display screen 1405 may alternatively belong to different display apparatuses. In this case, a display apparatus to which the first display screen 1401 belongs is connected to a display apparatus to which the second display screen 1405 belongs, and the two display apparatuses may be specifically connected by using an interface, so that data exchange can be performed between the two display apparatuses. Certainly, the display apparatus to which the first display screen 1401 belongs may not be connected to the display apparatus to which the second display screen 1405 belongs, and this embodiment of the present invention sets no limitation thereto.

In this embodiment of the present invention, both the first display screen 1401 and the second display screen 1405 may use a material such as an LED, an E_link, an OLED, or an LCD. Considering costs, the second display screen 1405 in this embodiment of the present invention may use a cost-effective material, for example, an LED dot matrix. Alternatively, the second display screen 1405 may have only a display function, and does not have a touchscreen function. To be more in conformity with somatology design principles, the second display screen 1405 in this embodiment of the present invention may be arc-shaped. In this case, the second display screen 1405 may use a flexible material, such as an E_link or an OLED.

In this embodiment of the present invention, not only the first display screen 1401 and the second display screen 1405 are used to jointly display the icons, and more display screens may be disposed to jointly display the icons. For example, in addition to the second display screen 1405, the encircling apparatus 1402 in this embodiment of the present invention may further include a third display screen. The second display screen 1405 and the third display screen are respectively disposed on two sides of the first display screen 1401. In addition, the first display screen 1401, the second display screen 1405, and the third display screen are configured to jointly display the icons.

It should be noted that, in this case, the encircling apparatus 1402 may include only the second display screen 1405 and the third display screen, and in this case, the encircling function is completely provided by the second display screen 1405 and the third display screen. Alternatively, in addition to the second display screen 1405 and the third display screen, the encircling apparatus 1402 in this embodiment may further include the fastening apparatus, and in this case, the second display screen 1405, the third display screen, and the fastening apparatus jointly provide the encircling function. In this case, the third display screen may be disposed on the fastening apparatus, or an end of the third display screen is connected to an end of the fastening apparatus. In addition, the first display screen 1401, the second display screen 1405, and the third display screen may belong to a same display apparatus, or may respectively belong to different display apparatuses. Considering costs, the third display screen in this embodiment of the present invention may use a cost-effective material. Alternatively, the third display screen may have only a display function, and does not have a touchscreen function. To be more in conformity with somatology design principles, the third display screen in this embodiment of the present invention may be arc-shaped. In this case, the third display screen may use a flexible material.

In this embodiment, jointly displaying icons by using two display screens is specifically described. In addition, this embodiment of the present invention further provides a process of performing a further operation on the displayed icons. For example, in this embodiment of the present invention, an operation of moving the displayed icons may further be performed, and the following describes, by using a specific example, a process of performing an operation of moving icons.

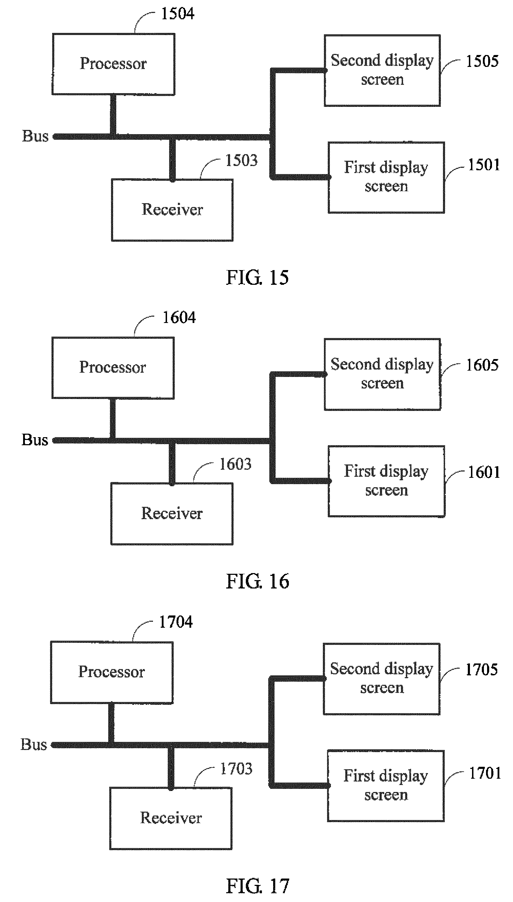

Referring to FIG. 15, an embodiment of the present invention provides a sixth embodiment of a wearable intelligent device. In this embodiment, the device includes a first display screen 1501, an encircling apparatus 1502 (not shown), a receiver 1503, and a processor 1504. The encircling apparatus 1502 is configured to fasten the device on a human body in an encircling manner, and the encircling apparatus 1502 includes a second display screen 1505.

The receiver 1503 is configured to receive a display operation instruction.

The processor 1504 is configured to: based on a preset sequence of at least two icons, jointly display the icons on the first display screen 1501 and the second display screen 1505.

The receiver 1503 is further configured to receive a movement operation instruction.

The movement operation instruction in this embodiment may be an instruction generated after a movement operation performed on an icon by a user is detected.

For example, the first display screen 1501 or the second display screen 1505 may be a touchscreen, and the movement operation instruction in this embodiment may be an instruction generated after a sliding operation on the touchscreen is detected. If both the first display screen 1501 and the second display screen 1505 are touchscreens, and both the touchscreens can respond to a sliding operation of the user, the movement operation instruction is generated after it is detected that the user performs a sliding operation on either display screen of the two display screens or concurrently performs a sliding operation on the two display screens. If only the first display screen 1501 is a touchscreen and the second display screen 1505 does not have a touchscreen function, or the second display screen 1505 cannot respond to a sliding operation of the user because of a system setting, in this case, the movement operation instruction is generated after it is detected that the user performs a sliding operation on the first display screen 1501.

If the encircling apparatus 1502 in this embodiment further includes a third display screen, the first display screen 1501, the second display screen 1505, or the third display screen is a touchscreen, and the movement operation instruction may be an instruction generated after a sliding operation on the touchscreen is detected.

In addition to a sliding operation, the movement operation instruction in this embodiment may alternatively be an instruction generated after another form of operation is detected. For example, the second display screen 1505 may be a touchscreen, the movement operation instruction may be an instruction generated after an operation of selecting a target icon on the touchscreen is detected, and the movement operation instruction includes the target icon. Selecting the target icon by the user indicates that the user intends to move the target icon from the second display screen 1505 to the first display screen 1501.

Alternatively, the wearable intelligent device in this embodiment may further include a mechanical setting apparatus, and the movement operation instruction may be an instruction generated after an operation on the mechanical setting apparatus is detected. For example, the mechanical setting apparatus may be a mechanical button, and different mechanical buttons may be set to respectively correspond to different movement operations. For example, mechanical buttons are set to respectively correspond to upward movement and downward movement. Alternatively, different positions of a mechanical button may be set to correspond to different movement operations, or pressing a mechanical button with different strengths and in different directions may be set to correspond to different movement operations. For another example, the mechanical setting apparatus may also be a mechanical lever, and the mechanical lever being shifted to different positions respectively correspond to different movement operations. Certainly, in addition to the mechanical button and the mechanical lever, the mechanical setting apparatus in this embodiment of the present invention may also be another form of mechanical apparatus that only needs to be capable of receiving a setting operation. It should be additionally noted that, the mechanical setting apparatus in this embodiment of the present invention may be an existing mechanical apparatus of mechanical setting apparatuses, or may be a newly-added mechanical apparatus, and this embodiment of the present invention sets no limitation thereto.

The following describes a position at which the foregoing mechanical setting apparatus is disposed. The foregoing mechanical setting apparatus may be disposed on the wearable intelligent device in this embodiment of the present invention, for example, the foregoing mechanical setting apparatus is disposed on the first display screen 1501 or the second display screen 1505. For example, when the wearable intelligent device is a smart watch, a mechanical button or a mechanical lever may be disposed on a side face of a watch dial. The foregoing mechanical setting apparatus may also not be disposed on the wearable intelligent device in this embodiment of the present invention, that is, the foregoing mechanical setting apparatus is not physically connected to the wearable intelligent device. In this case, the mechanical setting apparatus may be connected to the wearable intelligent device by using a wireless network.

The processor 1504 is further configured to acquire a movement direction in the movement operation instruction; and move, based on the movement direction and the preset sequence of the at least two icons, display positions of the icons on the first display screen 1501 and the second display screen 1505.

The movement operation instruction includes the movement direction of moving the icons. If the icons in this embodiment are specifically menu items of an operation menu, for example, after it is detected that the user performs a downward sliding operation or presses a mechanical button downwards, a movement operation instruction with a downward movement direction is generated, which indicates that the menu items need to be moved downwards.

Movement of the display positions of the icons on the first display screen 1501 and the second display screen 1505 is actually in a linkage manner.

A preferred manner is that a distance value of movement of the icons on the first display screen 1501 is equal to a distance value of movement of the icons on the second display screen 1505. Certainly, because the first display screen 1501 and the second display screen 1505 may be different in a display screen size and shape, distance values of movement of the icons on the two display screens may be different, and this embodiment of the present invention sets no limitation thereto.

It should be noted that, the first display screen 1501 and the second display screen 1505 may calculate to-be-displayed positions of the icons on the first display screen 1501 and the second display screen 1505 according to the acquired movement direction and the preset sequence of the icons, and rearrange the icons according to the to-be-displayed positions obtained by calculation.

In this embodiment, the receiver 1503 may further acquire a parameter value in the movement operation instruction, and in this case, the distance value of movement of the icons on the first display screen 1501 or the second display screen 1505 is corresponding to the acquired parameter value. For example, the parameter value may be a time length, a sliding distance, or the like of a detected sliding operation. Therefore, a longer time length or a longer sliding distance of the detected sliding operation indicates a larger final movement distance of the icons.

In this embodiment, if the movement operation instruction is the instruction generated after the operation of selecting the target icon on the second display screen 1505 is detected, the receiver 1503 is further configured to acquire the target icon in the movement operation instruction, and that the processor 1504 is configured to move the display positions of the icons on the first display screen 1501 and the second display screen 1505 is specifically: the processor 1504 is configured to move the display positions of the icons on the first display screen 1501 and the second display screen 1505, and display the target icon on the first display screen 1501.

It may be learned from the foregoing technical solution that, this embodiment mainly explains that after the icons are jointly displayed by using the first display screen 1501 and the second display screen 1505, linkage can be implemented between the icons displayed on the first display screen 1501 and the second display screen 1505.

In this embodiment of the present invention, when the icons are specifically menu items of an operation menu, at least one of operation processes of entering a next-level menu of a menu item, returning to a previous-level menu, and returning to a main menu may further be executed by means of a specific operation. The following uses an embodiment to describe a situation in which the foregoing three operation processes are concurrently executed.

Referring to FIG. 16, an embodiment of the present invention provides a seventh embodiment of a wearable intelligent device. In this embodiment, the device includes a first display screen 1601, an encircling apparatus 1602 (not shown), a receiver 1603, and a processor 1604. The encircling apparatus 1602 is configured to fasten the device on a human body in an encircling manner, and the encircling apparatus 1602 includes a second display screen 1605.

The receiver 1603 is configured to receive a display operation instruction.

The processor 1604 is configured to: based on a preset sequence of at least two icons, jointly display the icons on the first display screen 1601 and the second display screen 1605.

The receiver 1603 is further configured to receive a select operation instruction.

The select operation instruction in this embodiment may be an instruction generated after a select operation on a menu item on the first display screen 1601 or the second display screen 1605 is detected. The select operation may be an operation such as a tap, a double-tap, a touch & hold, or a slide in a specific direction, and this embodiment of the present invention sets no limitation thereto.

If both the first display screen 1601 and the second display screen 1605 are touchscreens, and both the display screens can respond to a select operation of a user, the select operation instruction is generated after it is detected that the user performs a select operation on either display screen of the two display screens or concurrently performs a select operation on the two display screens. If only the first display screen 1601 is a touchscreen and the second display screen 1605 does not have a touchscreen function, or the second display screen 1605 cannot respond to a select operation of the user because of a system setting, in this case, the select operation instruction is generated after it is detected that the user performs a select operation on the first display screen 1601.

In this embodiment, considering a purpose of avoiding a misoperation of the user, the first display screen 1601 may further be set as a to-be-selected area, only one menu item is displayed on the first display screen 1601, and the select operation instruction is generated only after a select operation on the menu item on the first display screen 1601 is detected.

The processor 1604 is further configured to acquire a selected menu item in the select operation instruction, and jointly display a next-level menu of the selected menu item on the first display screen 1601 and the second display screen 1605.

The select operation instruction includes the selected menu item. Actually, after a select operation performed on the menu item by the user is detected, the menu item that is selected is the selected menu item, and the select operation instruction that includes the selected menu item is generated, which indicates that the user selects the menu item. The selected menu item may be represented by an identifier of the menu item.

In this embodiment, if the selected menu item does not have a next-level menu, no operation may be performed, or the user may be prompted that information related to a next-level menu does not exist.

The receiver 1603 is further configured to receive a return operation instruction.

The return operation instruction in this embodiment may be an instruction generated after a return operation on the first display screen 1601 and/or the second display screen 1604 is detected.

For example, a return area may be displayed on the first display screen 1601, and the return operation instruction is generated after it is detected that the user selects the return area. Alternatively, the return operation instruction may be generated when it is detected that the user slides in a specific direction. For example, in this embodiment of the present invention, the following may be set: when it is detected that the user slides to the left, the select operation instruction is generated, and therefore a next-level menu is entered; when it is detected that the user slides to the right, the return operation instruction is generated, and therefore a previous-level menu returns. Alternatively, a specific mechanical button may be disposed on the wearable intelligent device and is configured to receive a return operation of the user. For example, a mechanical button is disposed at a specific position (for example, a left bottom) on the first display screen, and when it is detected that the mechanical button is pressed, the return operation is detected.

The processor 1604 is further configured to acquire a menu item currently displayed on the first display screen 1601, and jointly display a previous-level menu of the acquired menu item on the first display screen 1601 and the second display screen 1605.

In this embodiment, if the acquired menu item does not have a previous-level menu, no operation may be performed, or the user may be prompted that information related to a previous-level menu does not exist.

The receiver 1603 is further configured to receive a main menu operation instruction.

The main menu operation instruction in this embodiment may be an instruction generated after an operation of returning to a main menu on the first display screen 1601 and/or the second display screen 1605 is detected.

For example, a main menu area may be displayed on the first display screen 1601, and the main menu operation instruction is generated after it is detected that the user selects the main menu area. Alternatively, a specific mechanical button may be disposed on the wearable intelligent device and is configured to receive a return operation of the user. For example, a mechanical button is disposed at a specific position (for example, a right bottom) on the first display screen, and when it is detected that the mechanical button is pressed, the operation of returning to the main menu is detected.

The processor 1604 is further configured to jointly display the main menu of the operation menu on the first display screen 1601 and the second display screen 1605.

It may be learned from the foregoing technical solution that, this embodiment mainly explains that operation processes of entering a next-level menu, returning to a previous-level menu, and returning to the main menu can be executed after the menu items of the operation menu are jointly displayed on the first display screen 1601 and the second display screen 1605.

It should be noted that, the three operation processes of entering the next-level menu, returning to the previous-level menu, and returning to the main menu are concurrently executed in this embodiment, but in another embodiment, only one or more operation processes of the foregoing three operation processes may be executed.

Because most wearable intelligent devices (especially for a smart watch) have a function of displaying time, the wearable intelligent device in this embodiment of the present invention may further switch between an intelligent function and a time display function. The following makes description by using an embodiment.

Referring to FIG. 17, an embodiment of the present invention provides an eighth embodiment of a wearable intelligent device. In this embodiment, the device includes a first display screen 1701, an encircling apparatus 1702 (not shown), a receiver 1703, and a processor 1704. The encircling apparatus 1702 is configured to fasten the device on a human body in an encircling manner, and the encircling apparatus 1702 includes a second display screen 1705.

The receiver 1703 is configured to receive a display operation instruction.

The processor 1704 is configured to: based on a preset sequence of at least two icons, jointly display the icons on the first display screen 1701 and the second display screen 1705.

The receiver 1703 is further configured to receive a switching operation instruction.

The switching operation instruction in this embodiment may be an instruction generated after a time switching operation of a user is detected. For example, a specific mechanical button may be disposed on the wearable intelligent device and is configured to receive a time switching operation of the user. For example, a mechanical button is disposed at a specific position on the first display screen, and when it is detected that the mechanical button is pressed, the time switching operation is detected.

The switching operation instruction in this embodiment may alternatively be an instruction generated after it is detected that a preset condition of switching time is met. For example, the switching operation instruction is generated after it is detected that the user does not perform any operation on the device in this embodiment within a preset time.

The processor 1704 is further configured to hide icons currently displayed on the first display screen 1701 and the second display screen 1705, and display time on the first display screen 1701 and/or the second display screen 1705.

Except a part in which time is displayed, other parts on the first display screen 1701 and/or the second display screen 1705 may be made to be in a black screen state.

It may be learned from the foregoing technical solution that, this embodiment mainly explains that switching to a time display function can be performed after the icons are jointly displayed by using the first display screen 1701 and the second display screen 1705. After this embodiment, the icons may further be redisplayed by means of a specific operation.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. An icon display method of a wearable intelligent device, wherein the device comprises a first display unit and an encircling apparatus, the encircling apparatus is configured to fasten the device on a human body in an encircling manner, and the encircling apparatus comprises a second display unit; and
the method comprises:
receiving a display operation instruction; and
jointly displaying, based on a preset sequence of at least two icons, the icons on the first display unit and the second display unit.

2. The method according to claim 1, wherein the method further comprises:
receiving a movement operation instruction;
acquiring a movement direction in the movement operation instruction; and
moving, based on the movement direction and the preset sequence of the at least two icons, display positions of the icons on the first display unit and the second display unit.

3. The method according to claim 2, wherein a distance value of movement of the icons on the first display unit is equal to a distance value of movement of the icons on the second display unit.

4. The method according to claim 2 or 3, wherein the movement operation instruction is an instruction generated after a sliding operation on the first display unit or the second display unit is detected.

5. The method according to claim 2 or 3, wherein the device further comprises a mechanical setting apparatus, and the movement operation instruction is an instruction generated after an operation on the mechanical setting apparatus is detected.

6. The method according to claim 5, wherein the mechanical setting apparatus is disposed on the device.

7. The method according to claim 5, wherein the mechanical setting apparatus is connected to the device by using a wireless network.

8. The method according to claim 2 or 3, wherein the movement operation instruction is an instruction generated after an operation of selecting a target icon on the second display unit is detected, and the movement operation instruction comprises the target icon;
the method further comprises: acquiring the target icon in the movement operation instruction; and
the moving display positions of the icons on the first display unit and the second display unit is specifically:
moving the display positions of the icons on the first display unit and the second display unit, and displaying the target icon on the first display unit.

9. The method according to any one of claims 1 to 8, wherein the icons are specifically menu items of an operation menu.

10. The method according to claim 9, wherein the method further comprises:
receiving a select operation instruction;
acquiring a selected menu item in the select operation instruction; and
jointly displaying a next-level menu of the selected menu item on the first display unit and the second display unit.

11. The method according to claim 9 or 10, wherein the method further comprises:
receiving a return operation instruction;
acquiring a menu item currently displayed on the first display unit; and
jointly displaying a previous-level menu of the acquired menu item on the first display unit and the second display unit.

12. The method according to claim 9, 10, or 11, wherein the method further comprises:
receiving a main menu operation instruction; and
jointly displaying a main menu of the operation menu on the first display unit and the second display unit.

13. The method according to any one of claims 1 to 12, wherein the method further comprises:
receiving a switching operation instruction;
hiding icons currently displayed on the first display unit and the second display unit; and
displaying time on the first display unit and/or the second display unit.

14. The method according to any one of claims 1 to 13, wherein the encircling apparatus further comprises a third display unit, and the third display unit and the second display unit are respectively disposed on two sides of the first display unit; and
the jointly displaying the icons on the first display unit and the second display unit is specifically:
jointly displaying the icons on the first display unit, the second display unit, and the third display unit.

15. The method according to any one of claims 1 to 14, wherein the first display unit and the second display unit belong to a same display apparatus, or belong to different display apparatuses.

16. A wearable intelligent device, wherein the device comprises: a first display unit, an encircling apparatus, and a receiving unit, the encircling apparatus is configured to fasten the device on a human body in an encircling manner, and the encircling apparatus comprises a second display unit;
the receiving unit is configured to receive a display operation instruction; and the first display unit and the second display unit are configured to: based on a preset sequence of at least two icons, jointly display the icons.

17. The device according to claim 16, wherein:
the receiving unit is further configured to receive a movement operation instruction, and acquire a movement direction in the movement operation instruction; and
the first display unit and the second display unit are further configured to: based on the movement direction and the preset sequence of the at least two icons, move display positions of the icons.

18. The device according to claim 17, wherein a distance value of movement of the icons on the first display unit is equal to a distance value of movement of the icons on the second display unit.

19. The device according to claim 17 or 18, wherein the movement operation instruction is an instruction generated after a sliding operation on the first display unit or the second display unit is detected.

20. The device according to claim 17 or 18, wherein the device further comprises a mechanical setting apparatus, and the movement operation instruction is an instruction generated after an operation on the mechanical setting apparatus is detected.

21. The device according to claim 20, wherein the mechanical setting apparatus is disposed on the device.

22. The device according to claim 20, wherein the mechanical setting apparatus is connected to the device by using a wireless network.

23. The device according to claim 17 or 18, wherein the movement operation instruction is an instruction generated after an operation of selecting a target icon on the second display unit is detected, and the movement operation instruction comprises the target icon; and
that the first display unit and the second display unit are configured to move the display positions of the icons is specifically: the first display unit and the second display unit are configured to move the display positions of the icons, and display the target icon on the first display unit.

24. The device according to any one of claims 16 to 23, wherein the icons are specifically menu items of an operation menu.

25. The device according to claim 24, wherein the receiving unit is further configured to receive a select operation instruction, and acquire a selected menu item in the select operation instruction; and
the first display unit and the second display unit are further configured to jointly display a next-level menu of the selected menu item.

26. The device according to claim 24 or 25, wherein the receiving unit is further configured to receive a return operation instruction, and acquire a menu item currently displayed on the first display unit; and
the first display unit and the second display unit are further configured to jointly display a previous-level menu of the acquired menu item.

27. The device according to claim 24, 25, or 26, wherein the receiving unit is further configured to receive a main menu operation instruction; and
the first display unit and the second display unit are further configured to jointly display a main menu of the operation menu.

28. The device according to any one of claims 16 to 27, wherein the receiving unit is further configured to receive a switching operation instruction;
the first display unit and the second display unit are further configured to hide currently displayed icons; and
the first display unit and/or the second display unit are/is further configured to display time.

29. The device according to any one of claims 16 to 28, wherein the encircling apparatus further comprises a third display unit, and the third display unit and the second display unit are respectively disposed on two sides of the first display unit; and
the first display unit, the second display unit, and the third display unit are configured to jointly display the icons.

30. The device according to any one of claims 16 to 29, wherein the first display unit and the second display unit belong to a same display apparatus, or belong to different display apparatuses.

31. A wearable intelligent device, wherein the device comprises: a first display screen, an encircling apparatus, a receiver, and a processor, the encircling apparatus is configured to fasten the device on a human body in an encircling manner, and the encircling apparatus comprises a second display screen;
the receiver is configured to receive a display operation instruction; and
the processor is configured to: based on a preset sequence of at least two icons, jointly display the icons on the first display screen and the second display screen.

32. The device according to claim 31, wherein the receiver is further configured to receive a movement operation instruction; and
the processor is further configured to acquire a movement direction in the movement operation instruction; and move, based on the movement direction and the preset sequence of the at least two icons, display positions of the icons on the first display screen and the second display screen.

33. The device according to claim 32, wherein a distance value of movement of the icons on the first display unit is equal to a distance value of movement of the icons on the second display unit.

34. The device according to claim 32 or 33, wherein the first display screen or the second display screen is a touchscreen; and
the movement operation instruction is an instruction generated after a sliding operation on the touchscreen is detected.

35. The device according to claim 32 or 33, wherein the device further comprises a mechanical setting apparatus, and the movement operation instruction is an instruction generated after an operation on the mechanical setting apparatus is detected.

36. The device according to claim 35, wherein the mechanical setting apparatus is disposed on the device.

37. The device according to claim 35, wherein the mechanical setting apparatus is connected to the device by using a wireless network.

38. The device according to claim 32 or 33, wherein the second display screen is a touchscreen, the movement operation instruction is an instruction generated after an operation of selecting a target icon on the touchscreen is detected, and the movement operation instruction comprises the target icon;
the controller is further configured to acquire the target icon in the movement operation instruction; and
that the controller is configured to move the display positions of the icons on the first display screen and the second display screen is specifically: the controller is configured to move the display positions of the icons on the first display screen and the second display screen, and display the target icon on the first display screen.

39. The device according to any one of claims 31 to 38, wherein the icons are specifically menu items of an operation menu.

40. The device according to claim 39, wherein the receiver is further configured to receive a select operation instruction; and
the processor is further configured to acquire a selected menu item in the select operation instruction, and jointly display a next-level menu of the selected menu item on the first display screen and the second display screen.

41. The device according to claim 39 to 40, wherein the receiver is further configured to receive a return operation instruction; and
the processor is further configured to acquire a menu item currently displayed on the first display screen, and jointly display a previous-level menu of the acquired menu item on the first display screen and the second display screen.

42. The device according to claim 39, 40, or 41, wherein the receiver is further configured to receive a main menu operation instruction; and
the processor is further configured to jointly display a main menu of the operation menu on the first display screen and the second display screen.

43. The device according to any one of claims 31 to 42, wherein the receiver is further configured to receive a switching operation instruction; and
the processor is further configured to hide icons currently displayed on the first display screen and the second display screen, and display time on the first display screen and/or the second display screen.

44. The device according to any one of claims 31 to 43, wherein the encircling apparatus further comprises a third display screen, and the third display screen and the second display screen are respectively disposed on two sides of the first display screen; and
that the controller is configured to jointly display the icons on the first display screen and the second display screen is specifically: the controller is configured to jointly display the icons on the first display screen, the second display screen, and the third display screen.

45. The device according to any one of claims 31 to 44, wherein the first display screen and the second display screen belong to a same display apparatus, or belong to different display apparatuses.
